# EUROPÄISCHE PATENTSCHRIFT

(11) **EP 3 099 928 B1**
(45) Veröffentlichungstag und Bekanntmachung des Hinweises auf die Patenterteilung: **12.10.2022**
(21) Anmeldenummer: 15705514.6
(22) Anmeldetag: 28.01.2015
(51) Int. Cl.: F03D 3/04, F03D 3/02, F03D 3/06

(54) **WINDKONVERTER MIT VERTIKAL AUSGERICHTETER ACHSE**
VERTICAL AXIS WIND CONVERTER
CONVERTISSEUR ÉOLIEN À AXE ORIENTÉ À LA VERTICALE

(30) Priorität: 28.01.2014 DE 202014000646 U; 19.02.2014 DE 202014001753 U; 27.02.2014 DE 202014001735 U; 10.03.2014 DE 102014003050
(43) Veröffentlichungstag der Anmeldung: 07.12.2016
(73) Patentinhaber: Vahle, Rainer, 26871 Papenburg (DE)
(72) Erfinder: Vahle, Rainer, 26871 Papenburg (DE)
(74) Vertreter: Träger, Denis
(86) Internationale Anmeldenummer: PCT/EP2015/051744
(87) Internationale Veröffentlichungsnummer: WO 2015/114028

(56) Entgegenhaltungen:
- EP-A2- 2 330 295
- EP-A2- 2 604 852
- WO-A1-2013/024367
- WO-A1-2013/120250
- WO-A1-2013/174272
- WO-A2-2010/134103
- US-A1- 2009 322 095

## Beschreibung

Die vorliegende Erfindung betrifft einen Windkonverter beziehungsweise Windkraftkonverter für Klein-Windkraftanlagen, mit einem Rotor, der mehrere Rotorschaufeln aufweist und um eine vertikale Drehachse drehbar ist. Ferner betrifft die vorliegende Erfindung ein Windkonvertersystem.

Es sind zahlreiche Windkonverter, wie auch Windkraftanlagen, bekannt, die auch für Klein-Windkraftanlagen geeignet sind. Die bekannten Bauformen teilen sich in Horizontale und Vertikale Bauformen auf. Aufgrund des tendenziell geringeren Platzbedarfs sind für Klein-Windkraftanlagen Rotoren mit einer im Betrieb vertikalen Rotorachse besonders geeignet. Die Basismodelle vertikaler Klein-Windkraftanlagen stellen der Savonios-Rotor, der Darieus-Rotor und der H-Darieus-Rotor dar. Diese weisen jedoch geringe Leistungsbeiwerte auf. Aus dem Stand der Technik sind viele Varianten beziehungsweise Abwandelungen dieser Rotoren mit vertikaler Rotorachse bekannt.

Die EP 2 330 295 A2 zeigt einen Vertikalrotor mit verstellbaren Schaufeln zur horizontalen Durchströmung.

Aus der WO 2013/024367 A1 geht ein Vertikalrotor zur horizontalen Durchströmung hervor. Der Rotor weist Leitelemente zur Einstellung der Einströmung auf, die verstellbar sind.

Aus der WO 2013/174272 A1 ist ein Vertikalrotor bekannt, der beweglich angeordnete Leitelemente mit einer turmartigen Ummantelung mit Windeinfangelementen in Teilabschnitten zur horizontalen Durchströmung des Rotors aufweist.

Die EP 2 604 852 A2 offenbart einen horizontal durchströmten Vertikalrotor mit oberer Kopfplatte und unterer Bodenplatte bei dem verstellbare geteilte und bei hohen Windbelastungen verschließbare rotorblattförmige äußere Leitelemente rund um den eigentlichen Rotor angeordnet sind.

Die WO 2013/120250 A1 offenbart einen horizontal durchströmten Vertikalrotor mit einer umgebenden Leitvorrichtung aus zu öffnenden und zu verschließenden Klappen einer sechseckigen Kabine, wobei zusätzliche Leitelemente im Inneren angeordnet sind.

Aus der US 2009/0322095 A2 geht ein zur Minimierung der Reibung magnetisch gelagerter Vertikalrotor mit horizontaler Durchströmung hervor.

Schließlich betrifft die WO 2010/134103 A2 einen Vertikalrotor für große Leistungen, der auf einem teleskopisch verstellbaren Turm angeordnet ist.

Aufgabe der vorliegenden Erfindung ist es, einen Windkonverter mit vertikal ausgerichteter Achse, ein Windkonvertersystem und eine Windkraftanlage anzugeben, wobei eine verbesserte Nutzung von Schwachwinden und/oder ein höherer Wirkungsgrad beziehungsweise ein verbesserter Leistungsbeiwert und/oder ein einfacher beziehungsweise robuster Aufbau und/oder eine optimierte Wind- beziehungsweise Luftführung und/oder eine universelle Einsetzbarkeit erreicht werden können, wobei insbesondere negative Begleiterscheinungen, wie Verwirbelungen beziehungsweise Turbulenzen, Schlagschatten, Lichtreflektionen, hohe und schwere Mastkonstruktionen mit entsprechend schweren Fundamenten, Anlagenschwingungen und - schwankungen, schwingungs- und anlagenbedingte Frequenzen mit Übertragung an den jeweiligen Untergrund, die zu einer Leistungsminderung und/oder Leistungseinschränkungen führen können, vermieden oder zumindest minimiert werden können.

Die vorliegende Aufgabe wird durch einen Windkonverter gemäß Anspruch 1, durch ein Windkonvertersystem gemäß Anspruch 14 oder durch eine Windkraftanlage gemäß Anspruch 16 gelöst. Vorteilhafte Weiterbildungen sind Gegenstand der Unteransprüche und der folgenden Ausführungen.

Insbesondere können eine Steigerung der Effizienz pro Quadratmeter (qm) Windfläche/Nutzfläche und/oder eine Steigerung der Effizienz der Windnutzung bei Schwachwinden unterhalb von 5 m/s und/oder hohe Anpassungsmöglichkeiten an Einsatzorte und Nutzungsmöglichkeit bei Verwendung gleichbleibender Bauteile ermöglicht werden. Die Effizienzsteigerung erfolgt vorzugsweise unter Einbezug eines verbesserten Naturschutzes beziehungsweise Tierschutzes.

Vorzugsweise ist ein Einströmwinkel einstellbar, bei dem ein Luftstrom auf die Rotorschaufeln richtbar ist. Die Einstellung beziehungsweise Verstellung des Einströmwinkels erfolgt bevorzugt durch die Leitelemente.

Die Rotorschaufeln werden vorzugsweise von einem Luftstrom zumindest nur schräg beziehungsweise mit einer Umfangskomponente angeströmt beziehungsweise die Rotorschaufeln sind bevorzugt derart anströmbar. Vorzugsweise ist der Windkonverter verfahrbar ausgebildet. Besonders bevorzugt weist der Windkonverter mehrere, bevorzugt verstellbare Laufrollen auf.

Gemäß einem Aspekt der vorliegenden Erfindung ist vorgesehen, dass die Rotorschaufeln eine zumindest im Wesentlichen konkav geformte und/oder luvseitige Oberfläche aufweisen. Die Oberfläche der Rotorschaufeln weist vorzugsweise eine zumindest im Wesentlichen sägezahnförmige und/oder stufenartige Struktur auf. Weiter bevorzugt kann die Oberfläche der Rotorschaufeln wenigstens eine asymmetrisch gebildete Ausnehmung aufweisen, vorzugsweise mehrere Ausnehmungen. Damit wird eine Verbesserung der Anströmungsverhaltens erreicht. Dies folgt insbesondere aus der resultierenden Hebelwirkung an der Rotorschaufel. Besonders bevorzugt ist ein Abschnitt eines Zahns der sägezahnförmigen Struktur beziehungsweise einer Stufe der stufenförmigen Struktur zumindest im Wesentlichen senkrecht zur Hauptströmungsrichtung ausgerichtet. Die Hauptströmungsrichtung der anströmenden Luft wird vorzugsweise durch die Leitelemente vorgegeben.

Gemäß einem Aspekt der vorliegenden Erfindung ist vorgesehen, dass die Rotorschaufeln eine zumindest im Wesentlichen konkav geformte und/oder luvseitige Oberfläche aufweisen, wobei die Oberfläche eine zumindest im Wesentlichen sägezahnförmige Struktur und/oder asymmetrisch gebildete Ausnehmung aufweist und als Schaufelform verstärkte beziehungsweise verdickte Randbereiche aufweist. Die Randbereiche können für extreme Starkwindzonen eine zusätzliche Verstärkung aufweisen oder bilden. Die Rotorschaufeln können in einer bevorzugten Ausführung als Schaufelform verstärkt sein beziehungsweise verdickte Randbereiche aufweisen.

Vorzugsweise sind die Rotorschaufeln sichelförmig beziehungsweise schaufelförmig oder auf sonstige Weise gebogen beziehungsweise geschwungen ausgebildet. Die innere beziehungsweise konkave Seite ist vorzugsweise die im Betrieb dem Wind beziehungsweise Luftstrom zugewandte Seite. Diese wird allgemein auch Luv oder Luvseite genannt. Die andere, dem Wind beziehungsweise Luftstrom abgewandte Seite wird als Lee oder Leeseite bezeichnet.

Vorzugsweise ist die Rotorschaufel auf der Leeseite beziehungsweise der Luvseite beziehungsweise der konkav geformten Seite, insbesondere der zu- oder abgewandten Seite, zumindest im Wesentlichen konvex ausgebildet. Die Rotorschaufel ist im Querschnitt, insbesondere in einer zur Drehachse senkrecht stehenden Schnittebene, vorzugsweise zumindest im Wesentlichen sichelförmig ausgebildet.

Im Betrieb des Windkonverters werden die Rotorschaufeln bevorzugt von der Luvseite mit Wind beziehungsweise Luft beaufschlagt und/oder in die leeseitige Richtung angetrieben beziehungsweise gedreht.

Die sägezahnförmige Struktur beziehungsweise die asymmetrisch gebildeten Ausnehmungen auf der konkav geformten beziehungsweise Luvseite der Rotorschaufeln bietet beziehungsweise bieten in diesem Zusammenhang den Vorteil, dass auf die Rotorschaufeln treffende Luft bereits bei flachen Anströmwinkel einen effektiveren Antrieb des Rotors ermöglicht. Insbesondere führt die Struktur beziehungsweise die wenigstens eine Ausnehmung dazu, dass die Rotorschaufeln Flächen aufweisen, die bereits bei einem flachen Anströmwinkel zu diesem Anströmwinkel quer stehen. Somit kann die auftreffende Luft eine verstärkte Kraftkomponente und damit ein erhöhtes Drehmoment in Antriebsrichtung erzeugen. Dies verbessert in vorteilhafter Weise den Wirkungsgrad beziehungsweise den Leistungsbeiwert. Der an den Rotorschaufels wirkende Hebeleffekt ist nach Erkenntnissen des Erfinders ein wesentlicher Grund für die beobachtete Leistungssteigerung.

Gemäß einem weiteren Aspekt der vorliegenden Erfindung ist vorgesehen, dass die Rotorschaufeln zumindest im Wesentlichen aus einem aufgeschäumten Material bestehen. Insbesondere können die Rotorschaufeln also aus einem Hartschaum, einem Halbhartschaum oder dergleichen bestehen. Wesentlich bei der Materialwahl ist ein gleiches Querschnittsgewicht der Rotorschaufel, vorzugsweise als über den Querschnitt konstantes Querschnittsgewicht. Damit liegt das Hauptgewicht vorzugsweise im Achsbereich. Hierdurch können ausgesprochen stabile und gleichzeitig sehr leichte Rotorschaufeln erreicht werden.

Vorzugsweise weisen die Rotorschaufeln eine zumindest abschnittsweise strukturierte Oberfläche und/oder mehrere Ausnehmungen auf. Durch die strukturierte Oberfläche beziehungsweise die Ausnehmungen kann erreicht werden, dass sich die Luft in der angeströmten Rotorschaufel besser verfängt und folglich der Wirkungsgrad des Windkonverters steigt.

Besonders bevorzugt ist vorgesehen, dass die strukturierte Oberfläche beziehungsweise die Ausnehmungen an der Luvseite der Rotorschaufeln vorgesehen ist, also der windzugewandten Seite. Ferner ist bevorzugt, dass die Rotorschaufeln schaufelförmig beziehungsweise sichelförmig oder auf sonstige Weise konkav geformt sind, insbesondere schaufelseitig beziehungsweise konkav auf der Luvseite. Dies sorgt dafür, dass die Rotorblätter besonders effektiv von der Luftströmung angeströmt werden können. Dies gilt insbesondere in einem hinreichend großen Winkelbereich im Verlauf der Rotordrehung.

In synergistischer Weise kann der Wirkungsgrad beziehungsweise Leistungsbeiwert des Windkonverters dadurch verbessert werden, dass eines oder mehrere, insbesondere alle Rotorschaufeln aus Hartschaum und/oder Halbhartschaum gebildet sind. Weiter bevorzugt können sie zumindest im Wesentlichen aus einem aufgeschäumten Material bestehen. Als besonders vorteilhaft hat sich in diesem Zusammenhang gezeigt, dass das mehrere Hohlräume aufweisende beziehungsweise aufgeschäumte Material auch bei Bildung größerer Ausnehmungen noch die notwendige Eigenstabilität der Rotorschaufel ermöglicht. Gleichzeitig können die Rotorschaufeln aufgrund der Ausnehmungen mit einem geringeren Gewicht hergestellt werden, was die Lagerung vereinfacht, die Geräuschentwicklung und das Drehverhalten verbessert. Ein gleiches beziehungsweise konstantes Querschnittsgewicht sorgt insbesondere für eine gleichmäßige Gewichtsverteilung. Vorzugsweise liegt das Hauptgeweicht im Achsbereich.

Ferner vorzugsweise können die Rotorschaufeln eine konkav geformte und/oder luvseitige Oberfläche aufweisen, die strukturiert ist und/oder mehrere Ausnehmungen aufweist. Die Strukturierungen beziehungsweise die Ausnehmungen der Rotorschaufeln sind besonders bevorzugt asymmetrisch gebildet und/oder sägezahnförmig.

Gemäß der Erfindung weist der Windkonverter mehrere Leitelemente, insbesondere Leitbleche auf. Hierbei sind die Leitelemente dazu ausgebildet, einen Luftstrom einzufangen und auf die Rotorschaufeln zu richten. Die Leitelemente weisen jeweils eine Leitfläche zum Leiten und/oder Umlenken von Luft auf, wobei die Leitfläche einen der Rotorwelle abgewandten Anströmbereich und einen der Rotorwelle zugewandten Abströmbereich aufweist. Der Anströmbereich ist ein rotorferner Bereich oder Abschnitt des Leitelements. Der Abströmbereich ist ein rotornaher Abschnitt oder Bereich des Leitelements. Der Anströmbereich entspricht vorzugsweise einem radial außen angeordneten und/oder der Abströmbereich einem radial innen angeordneten Bereich. Der radial innere oder Abströmbereich kann dem Rotor zugewandt und/oder der radial äußere oder Abströmbereich kann dem Rotor abgewandt sein. Insbesondere sind die Begriffe Anströmbereich, radial äußerer oder dem Rotor abgewandter Bereich austauschbar. Entsprechendes gilt für die Begriffe Abströmbereich, radial innerer Bereich oder dem Rotor zuge-wandter Bereich der Leitelemente.

Erfindungsgemäß ist der Abströmbereich gegenüber dem Anströmbereich geneigt wobei die Neigung beziehungsweise deren Ubergang bevorzugt durch einen Knick oder eine sonstige Krümmung erzeugt wird. Es ist also insbesondere ein asymmetrischer Aufbau der Leitelemente vorgesehen, wobei die Krümmung zur Umlenkung eines Luftstroms überwiegend auf einer der Drehachse zugewandten beziehungsweise in Bezug auf den Rotor inneren Seite der Leitelemente vorgenommen wird. Die Leitelemente sind bevorzugt dazu ausgebildet, vorrangig auf einer dem Rotor zugewandten beziehungsweise in Bezug auf den Windkonverter inneren Seite der Leitelemente eine Umlenkung von Luftströmungen zu ermöglichen.

Vorzugsweise ist vorgesehen, dass ein rotorseitiges Ende des Abströmbereichs beziehungsweise des dem Rotor zugewandten Bereichs der Leitelemente zumindest im Wesentlichen so zur Radialen beziehungsweise Drehachse im Axialschnitt (Horizontalschnitt) wie ein freies beziehungsweise leitelementseitiges Ende den Rotorschaufeln geneigt ist. Insbesondere wird die Luftströmung schräg auf die luvseitige Oberfläche der Rotorschaufeln geleitet. Dies bietet den Vorteil einer besonders geräuscharmen Betriebsweise, insbesondere da ein Pfeifen und sonstige insbesondere durch Verwirbelungen und Strömungsabrisse hervorgerufene Geräuschentwicklungen verringert oder vermieden werden.

Gemäß einem weiteren Aspekt der vorliegenden Erfindung weist der Windkonverter eine magnetische beziehungsweise schwebende Lagerung für den Rotor auf. Vorzugsweise trägt der Rotor Rotorschaufeln, die zumindest im Wesentlichen aus einem aufgeschäumten Material gebildet sind. Durch die magnetische Lagerung können Reibungsverluste verringert oder quasi vermieden werden, was zu einem frühen Anlaufen bei kleinsten Luftströmungen führt und ebenso zu besseren Nachlaufeigenschaften führt und damit zu verbesserten Wirkungsgrad führt. Eine magnetische Lagerung ist typischerweise jedoch nur bei verhältnismäßig leichten Rotoren praktikabel. Insbesondere handelt es sich um eine magnetische Lagerung mittels Permanentmagneten, die folglich im Betrieb zu keinem zusätzlichen Energieverbrauch führt. Der Materialeinsatz beziehungsweise die Anzahl oder Stärke der Magnete hängt unmittelbar vom Rotorgewicht ab. Ein leichterer Rotor ermöglicht daher Materialersparnis im Bereich der verhältnismäßig teuren und aufwendigen Permanentmagneten. Entsprechendes gilt auch für Elektromagnete oder einer Mischlösung. Mischlösungen können hilfreich mit dazu dienen, bei schweren orkanartigen Stürmen zu Bremszwecken eingesetzt werden, um auch Generatoren einen zusätzlichen Überlastungsschutz zu ermöglichen.

Im vorliegenden Fall ist die Kombination mit einem Rotor, der Rotorschaufeln trägt, die Hohlräume aufweisen und/oder zumindest im Wesentlichen aus einem aufgeschäumten Material bestehen, besonders vorteilhaft, da diese Materialien besonders leicht sind und gleichzeitig stabil sind. Auf diese Weise wird die magnetische Lagerung ermöglicht oder zumindest erleichtert.

Gemäß einem weiteren Aspekt der vorliegenden Erfindung ist der Windkonverter verfahrbar. Insbesondere kann der Windkonverter Rollen und/oder Räder aufweisen, mittels dessen die Position des Windkonverters geändert werden kann. Dies ermöglicht in vorteilhafter Weise eine flexible Anwendung und/oder Transporterleichterung des Windkonverters beziehungsweise eines mit dem Windkonverter gebildeten Windkonvertersystems oder einer mit dem Windkonverter gebildeten Windkraftanlage.

Gemäß einer bevorzugten Ausführungsform ist vorgesehen, dass mehrere Rotoren mit jeweils mehreren Rotorblättern axial zueinander oder übereinander versetzt angeordnet sind, um eine gemeinsame Drehachse drehbar gelagert sind und/oder eine gemeinsame Rotorwelle aufweisen. Die Rotorschaufeln eines der axial zueinander angeordneten Rotoren sind gegenüber den Rotorschaufeln eines anderen der axial zueinander angeordneten Rotoren vorzugsweise zueinander versetzt, gegeneinander verdreht oder auf sonstige Weise zueinander nicht fluchtend angeordnet. Dies ermöglicht in vorteilhafter Weise eine gleichmäßige Antriebsleistung beziehungsweise kontinuierliche Kraftentfaltung. So treibt ein auf den Windkonverter treffender Luftstrom, insbesondere wenn er mittels der Leitelemente umgelenkt wird, die unterschiedlichen Rotoren im Wechsel und gleichzeitig besonders effektiv an. Hierdurch kann eine besonders gute Laufruhe und ein geräuscharmer Betrieb ermöglicht werden.

Ein weiterer Aspekt der vorliegenden Erfindung betrifft ein Windkonvertersystem mit mehreren, separat voneinander realisierten, vorschlagsgemäßen Windkonvertern. Die Windkonverter können axial zueinander angeordnet sein, um eine gemeinsame Drehachse drehbar gelagert sein und/oder eine gemeinsame Rotorwelle aufweisen. Insbesondere ist vorgesehen, dass die Rotoren der unterschiedlichen Windkonverter miteinander drehfest gekoppelt sind beziehungsweise werden. Hierdurch kann eine modulare Vergrößerung beziehungsweise Verkleinerung des Windkonvertersystems durch Montage beziehungsweise Demontage von Windkonverter erreicht werden. Hierbei kann der im Betriebszustand unterste Windkonverter Mittel aufweisen, die eine Positionsänderung des Windkonvertersystems erleichtert. Insbesondere kann der im Betriebszustand unterste Windkonverter auf seiner Unterseite Räder, Rollen, Gleiter, Laufschienen oder sonstige Lagermittel aufweisen. Damit wird eine flexible Positionierung, Ausrichtung und/oder Transporterleichterung des Systems ermöglicht.

Ein weiterer Aspekt der vorliegenden Erfindung betrifft eine Windkraftanlage, die wenigstens einen vorschlagsgemäßen Windkonverter und/oder wenigstens ein vorschlagsgemäßes Windkonvertersystem und vorzugsweise wenigstens einen Generator aufweist.

Weitere Aspekte und Vorteile der vorliegenden Erfindung sind:
Der vorschlagsgemäße Windkonverter weist eine windeinfangende und windführende, offene Ummantelung beziehungsweise Struktur oder Anordnung von Leitelementen beziehungsweise Windführungselementen - insbesondere über den gesamten Umfang - auf.

Es wird ein Windkonverter mit einer verlustfreien Lagerung ermöglicht, insbesondere mit einer magnetischen Lagerung.

Es wird ein Windkonverter mit variablem Unterteil- und Rahmensystem ermöglicht.

Beim Rotieren der Rotoren wird eine Fläche von X entsprechend der Rotorengröße durchstrichen. Der mit zunehmender Windgeschwindigkeit zunehmende Druck versetzt die Rotoren in Rotation. Zunehmende Windgeschwindigkeit und damit verbundener steigender Druck pro qm ist für die aus dem Wind zu erwirtschaften Energieleistungen mitentscheidend. Alle bekannten Bauformen sind bisher jedoch von/mit ähnlichen negativen Begleiterscheinungen belastet, welche auch leistungsmindernde Wirkung haben, insbesondere sind dies Verwirbelungen beziehungsweise Turbulenzen, Schlagschatten, Lichtreflektionen, hohe und schwere Mastkonstruktionen mit entsprechend schweren Fundamenten, Anlagenschwingungen und Anlagenschwankungen, schwingungs- und anlagenbedingte Frequenzen mit Übertragung an den jeweiligen Untergrund sowie physikalische Grenzen bei der Nutzung der kinetischen Energie des Windes. Damit steht die Effizienz einer Anlage von der jeweiligen Form, dem Gesamtkonzept mit Generator und Einspeisekomponenten im direkten Zusammenhang. Für eine Konkurrenzfähigkeit ist nicht zwingend die Größe oder die Bauform einer Windkraftanlage, wie auch nicht der Aufstellungsort beziehungsweise Montageplatz entscheidend. Von maßgebender Bedeutung sind vielmehr die Effizienz beziehungsweise Leistung aus genutzter Windfläche pro qm. Außerdem ist es von maßgebender Bedeutung, negative Begleiterscheinungen weitestgehend zu vermeiden. Aus bisheriger Sichtweise sind den bekannten Bauformen jedoch physikalische Grenzen gesetzt.

Erfindungsgemäß kann eine verbesserte Effizienz pro Quadratmeter (qm) Windfläche erreicht werden.

Weiter wird einerseits eine Minimierung der bekannten negativen Begleiterscheinungen, wie Verwirbelungen beziehungsweise Turbulenzen, Schlagschatten, Lichtreflektionen, hohe und schwere Mastkonstruktionen mit entsprechend schweren Fundamenten, Anlagenschwingungen und - schwankungen, schwingungs- und anlagenbedingte Frequenzen mit Übertragung an den jeweiligen Untergrund, und/oder andererseits eine Steigerung der Effizienz pro qm Windfläche/Nutzfläche erreicht beziehungsweise ermöglicht.

Weiter werden hohe Anpassungsmöglichkeiten an Einsatzorte und Nutzungsmöglichkeit bei Verwendung gleichbleibender Bauteile bei gleichbleibender Grundfläche (Breite/Tiefe) ermöglicht.

Vorzugsweise sind die Rotorschaufeln schaufelförmig oder/auch sichelförmig gestaltet beziehungsweise geformt. Bei der schaufelförmigen beziehungsweise sichelförmigen gestalteten Gesamtform ist die Luvseite beziehungsweise Innenseite, die im Betrieb vom Wind beziehungsweise Luftstrom beaufschlagte Seite.

Die Oberfläche der dem Wind entgegenstehenden Rotorschaufeln weist eine im Wesentlichen sägezahnförmige, insbesondere mit durchgehender Zahnfolge und/oder Einzelzähnen, auf. Die Formulierung "sägezahnartig" ist auch so aufzufassen, dass es generell um Hindernisse auf der windaufschlagenden Seite geht. Hindernisse, welche dem Wind ein leichtes Vorbeistreichen erschweren, sind wie Ansätze für Hebelkräfte beziehungsweise bewirken einen Antriebsmoment. Dies ist leistungssteigernd. Kleine Energien (Schwachwind) können mehr Leistung erbringen. Hervorzuheben ist eine bevorzugte sägezahnartige Struktur, in der Form dass die Zähne gegen den einströmenden Wind zeigen und somit ein Hindernis darstellen.

Vorzugsweise verjüngen sich die Rotorschaufeln nach außen hin, so dass das Hauptgewicht im Achsbereich liegt und somit zur jeweiligen Schaufelspitze abnimmt.

Die Rückseite der Rotorschaufeln ist vorzugsweise ebenfalls gewölbt und/oder glatt gehalten. Die Rückseite ist die dem Wind beziehungsweise Luftstrom abgewandte Seite. Diese wird auch als Lee oder Leeseite bezeichnet.

Die sägezahnförmige Struktur der Rotorschaufeln beziehungsweise Windfangschaufeln hat den Vorteil, dass die aufschlagende Luftströmung bereits bei schwachen Wind- beziehungsweise Luftströmungen einen Antrieb des Rotors ermöglicht. Dies verbessert in vorteilhafter Weise den Wirkungsgrad beziehungsweise den Leistungsbeiwert beziehungsweise das Drehmoment.

In Bezug zur Lagerung ist auch das Gewicht der rotierenden Elemente (Rotoren) von Bedeutung. Es sollte nicht zu schwer und nicht zu leicht sein, aber dennoch in sich ausgewogen und witterungsbeständig. Ein geringes Eigengewicht der Rotoren ermöglicht einen nur geringen Aufwand bei der Lagerung.

Vorzugsweise wird für die Rotorschaufeln als Basismaterial ein XPS-Hartschaum, insbesondere aus Blockware geschnitten oder gefräst, vorzugsweise mit zusätzlicher UV-beständiger Oberflächenbeschichtung, oder ein PUR-Halbhartschaum verwendet. Polyurethan-Formteile aus Integral-Halbhartschaum lassen sich durch die Mischung der Rohstoffe in ihren Eigenschaften derzeit optimal anpassen.

Vorzugsweise ist die gleiche Anzahl von Windfangschaufeln auf zwei übereinanderliegenden Ebenen angeordnet und zueinander versetzt, insbesondere über eine Welle oder Trägerscheibe beziehungsweise ein Trägerelement fest miteinander verbunden. Die Schaufeln der verschiedenen Ebenen sind vorzugsweise in Umfangrichtung versetzt. Dies ermöglicht in vorteilhafter Weise eine gleichmäßige Antriebsleistung beziehungsweise kontinuierliche Kraftentfaltung. Dies kann dadurch erreicht werden, dass ein auf die Windkonverter treffender Luftstrom, insbesondere wenn er mittels der Leitelemente umgelenkt wird, die unterschiedlichen Rotoren im Wechsel und gleichzeitig, besonders effektiv antreibt. Hierdurch kann insgesamt eine besonders gute Laufruhe und ein geräuscharmer Betrieb ermöglicht werden, da somit Strömungsabrisse und Verwirbelungen minimiert werden können.

Zur Effizienz der vorschlagsgemäßen Anordnung zählen nicht nur momentane Leistungswerte. Vorzugsweise wird auch eine wartungsarme Langlebigkeit erreicht.

In bevorzugender Weise ist die Welle aus einer Aluminiumlegierung mit gehärteter Oberfläche hergestellt. Vergleichbares ist aber auch aus dem Bereich der Technischen Kunststoffe möglich.

Bei einem möglichen Luftspalt zwischen rotierenden Elementen und der Welle sind Reibungsverluste minimiert, ebenso wie Geräuschentwickelung. Ein Luftspalt ist möglich, da die Welle/Achse vorzugsweise eine nicht tragende, sondern nur führende Funktion hat. Zusätzliche konventionelle Lager, wie Kugel- oder Rollenlager sind nicht zwingend erforderlich. Ein stabiler und ruhiger Lauf wird vorzugsweise über eine entsprechende Lagertechnik im unteren Bereich gewährleistet.

Die bevorzugte Lagerung mittels Permanentmagneten, also die Magnetlagerung der Wind aufnehmenden Rotoren, wird vorzugsweise dadurch gelöst, dass der abstoßende Effekt von Permanentmagneten die gesamte Last der rotierenden Elemente, also den Rotor, in einem stabilen Schwebezustand hält beziehungsweise trägt. Hierbei sind bevorzugt flach eingesetzte Ringmagnete, oder Einzelmagnete ringförmig verbaut. Eine Kombination mit oder alleinige Realisierung durch Elektromagnete ist grundsätzlich ebenfalls möglich.

Durch eine solche Magnetlagerung entsteht eine reibungs- und verlustfreie Lagerung, die eine verbesserte Windnutzung in/bei allen Windgeschwindigkeiten bewirkt. Keine Reibung bedeutet auch eine Minimierung der Geräuschentwickelung und keinen Verschleiß.

Der Materialeinsatz beziehungsweise die Anzahl oder Stärke der Magnete hängt unmittelbar vom Rotorgewicht ab. Ein leichterer Rotor ermöglicht daher eine Ersparnis der verhältnismäßig teuren Permanentmagnete.

Vorzugsweise weist die Anordnung eine windeinfangende, wie auch windführende offene Ummantelung aus beziehungsweise mit mehreren Leitelementen, insbesondere Leitblechen auf. Hierzu haben die Leitelemente, die Aufgabe, den Wind beziehungsweise Luftströmungen einzufangen und den Wind beziehungsweise Luftstrom auf die Rotorblätter beziehungsweise Windschaufeln zu leiten beziehungsweise führen. Die Formgebung der Windleitbleche beinhaltet vorzugsweise Spielräume von gebogenen, geschwungenen z.B. auch sichelartigen, ebenso geknickten und bevorzugten gewinkelten Formen. Damit sind unterschiedliche Einsatzbereiche und Optimierungsmöglichkeiten gegeben. Erfindungsgemäß soll eine möglichst optimale Windleitung auf die Rotorblätter erfolgen.

Die Windleitbleche werden vorzugsweise über eine Rahmenkonstruktion mit den rotieren Rotorelementen so verbunden, dass diese in ihrer Position fixiert beziehungsweise gehalten werden.

Vorzugsweise weisen die Leitbleche geschlitzte Befestigungsbereiche auf. Dies ermöglicht durch entsprechende Justierung eine Anpassung an die jeweiligen örtlichen Gegebenheiten, wie Windverhältnisse. So kann die jeweilige Luftströmung optimal auf die Windfangschaufeln (Rotorblätter) aufschlagen beziehungsweise geleitet werden. Hierdurch wird eine optimale Windnutzung ermöglicht. So kann das Drehmoment beziehungsweise der Leistungsbeiwert optimiert / gesteigert werden.

Die Anordnung beziehungsweise deren Gestell weist vorzugsweise eine Aufstellfläche beziehungsweise Unterseite auf und ist damit fest verbunden.

Die Aufstellfläche kann und sollte Durchbrüche aufweisen, insbesondere wie Gitterroste. Die Durchbrüche können jegliche Form haben. Podeste wie auch Sockel haben zumeist Füße, häufig Eckelemente wie Pfosten und/oder gegebenenfalls obere Abschlüsse wie Geländer. Diese können jeweils je nach Bedarf eingesetzt werden.

Als Material können neben Kunststoffen und Holz insbesondere auch Metalle, wie Stahl oder Aluminium, zum Einsatz kommen.

Bevorzugt ist als Material für das Gestell beziehungsweise die Unterkonstruktion ein glasfaserverstärkter Kunststoff, wie GFK. Dies ist der Witterungsbeständigkeit und Langlebigkeit zuträglich und ermöglicht eine hohe Tragfähigkeit, Stabilität und Sturmsicherheit.

Mit an der Unterkonstruktion vorzugsweise vorgesehenen Eckpfosten bieten sich weitere Möglichkeiten zur Traglaststeigerung und Vergrößerung der Windaufnahmefläche (Erntefläche).

Vorzugsweise sind zusätzliche Windleitelemente an den Eckpfosten von und zur Drehachse ausgerichtet angeordnet. Hierdurch ergibt sich in bevorzugter Weise die Möglichkeit den Wind beziehungsweise Luftströmungen einer größeren Fläche zu ernten ohne die Bauteile der Anordnung zu verändern, insbesondere um das mögliche Drehmoment und die Leistungskurve beziehungsweise den Leistungsbeiwert zu steigern. Mit beziehungsweise durch die zusätzlichen Windleitelementen an den Eckpfosten, welche vorzugsweise von und zur Drehachse ausgerichtet angeordnet werden, ergibt sich ein zusätzlicher Trichtereffekt und bessere Windnutzung auf der gesamten Breite des Konverters, die eine Erhöhung beziehungsweise Verbesserung von Drehmoment beziehungsweise Leistungskurve beziehungsweise des Leistungsbeiwerts ermöglichen.

Vorzugsweise ist der Windkonverter verfahrbar. Insbesondere kann er Rollen beziehungsweise Räder aufweisen oder damit ausgerüstet sein/werden, mittels derer die Position des Windkonverters geändert werden kann. Dies ermöglicht in vorteilhafter Weise eine flexible Anwendung des Windkonverters, sowie eine Transporterleichterung und mobile kurzzeitliche Einsätze an unterschiedlichen Orten, wie auch eine Erleichterung beim Standortwechsel.

Es besteht die Möglichkeit der Leistungssteigerung mit gleichen Bauteilen durch eine Modulbauweise. Somit besteht die Möglichkeit entsprechend höhere Leistungswerte mit gleichen Bauteilen auf gleichbleibender Grundfläche zu erwirtschaften.

Vorzugsweise werden mehrere Module beziehungsweise Windkonverter übereinander angeordnet und bilden ein Windkonvertersystem. Zusätzlich können auf der Oberseite eines solchen Systems oder auf einer einzelnen Windkonverter ein oder mehrere Photovoltaik-Module angeordnet werden. So kann bei entsprechender Sonneneinstrahlung zusätzlich zur Windenergie auch noch Strom aus Sonnenlicht gewonnen werden. Dies verbessert die Gesamteffizienz / Gesamtleistung der Anlage. In vielen Regionen herrscht bei guter sommerlicher Witterung häufig nur sehr geringes Windaufkommen. So kann zum Wind ein kleiner Ausgleich, wie auch eine Ergänzung erwirtschaftet werden.

Auf der Oberseite kann bedarfsweise auch ein Storchennest montiert werden. Natur und Umweltschutz sowie die Laufruhe und Stabilität beziehungsweise Standfestigkeit, wie auch Tragfähigkeit, ermöglichen diese ungewöhnliche Möglichkeit.

Durch die Formgebung und Stellung der Ummantelung beziehungsweise der Leitelemente, im Zusammenspiel mit den Rotoren (Windfangschaufeln) ist nur eine Rotationsrichtung vorgegeben.

Auftreffender Wind hat die Möglichkeit, vertikal zur Achse den Windkonverter nach oben und unten zu verlassen. Dadurch wird für den jeweiligen Generator eine zusätzliche Kühlung gegen Überlastung und auf der windabgewandten Seite eine windberuhigte Zone ohne Verwirbelungen ermöglicht. Die Vermeidung von Verwirbelungen auf der windabseitigen Seite ermöglicht eine Minimierung beziehungsweise Beseitigung der bereits genannten Schwierigkeiten beziehungsweise negativen Begleiterscheinungen bekannter Bauformen und/oder wie auch Steigerung der Gesamteffizienz.

Vorteilhafterweise verstellt die offene windführende Ummantelung durch ihre Form und Winkelstellung größten Teils die Sicht auf die im Inneren rotierenden Elemente, so dass der vorschlagsgemäße Windkonverter unter Berücksichtigung der extremen Laufruhe und dem insgesamt ruhigen Erscheinungsbild als ruhiger fester Pol anzusehen ist und für Tiere aller Art keine Beeinträchtigung oder Gefahr darstellt.

Dort wo keine Gefahr gesehen wird, wird unter Umständen aber Neugierde erzeugt. Um auch hier die Tiere zu schützen ergibt sich eine zusätzliche Möglichkeit einer weiteren Ummantelung durch ein Netz. Hierzu bieten sich die Eckpfosten der Unterkonstruktion gerade zu an. Hierbei können die Eckpfosten die Funktion von Zaunpfosten oder Volieren Rahmen einnehmen. Für die Schutznetze bieten sich Möglichkeiten wie Maschendraht aus Zaun oder Volierenbau an.

Bevorzugt sind Netze wie beim Teichbau als Laubfangnetze oder Fischschutz gegenüber von Fischreihern, welche sich von den Fischbeständen von Zuchtteichen ernähren wollen. Solche Netze sind weich und minimieren Verletzungen.

Winterliche Wetterextreme, wie Eisregen, können keine Schäden verursachen. Dem kann durch die Schutznetze begegnet werden. Eisregen verfängt sich, läuft an den Schutznetzen herunter und bildet eine Schutzhülle. Der Windkonverter bleibt vor Schäden geschützt. Nach Abschmelzen oder Austausch der Netze bleibt der Windkonverter betriebsbereit und funktionstüchtig.

Bei der Verwendung des Windkonverters zur Stromerzeugung mittels eines Generators bietet der Markt unterschiedliche Bauformen und Leistungsklassen. Für die vertikale Bauform haben sich Generatoren mit einem niedrigen Drehzahlbereich von 65 U/min bis 300 U/min bereits bewährt. Diese bieten bei niedriger Drehzahl eine hohe Leistungsdichte.

Bevorzugt für den Windkonverter sind Axial Flux Permanent Magnet (PM) Generatoren beziehungsweise PM Scheibengeneratoren beziehungsweise Generatoren mit hohen Leistungsdichten bei niedrigen Drehzahlen.

Bei bekannten Bauformen von Windkraftanlagen, insbesondere bei vertikalen Bauformen, müssen die Generatoren alle auftretenden Kräfte sowie durch Wirbel und Windböen verursachte Schwingungen und Schwankungen und die Lasten, der im Winde rotierenden Rotorkonstruktionen aufnehmen. Aufgrund des neuen Strömungsbilds durch den Windkonverter hindurch entfallen diese Nachteile. Es wird erfindungsgemäß nur die reine Rotationsenergie des vom Wind angetriebenen Rotor auf den Generator zur Stromerzeugung übertragen.

Weitere Aspekte, Vorteile und Eigenschaften der vorliegenden Erfindung ergeben sich aus den Ansprüchen sowie aus der folgenden Beschreibung eines bevorzugten Ausführungsbeispiels anhand der Zeichnung. Es zeigt:
- Fig. 1: eine perspektivische Ansicht eines vorschlagsgemäßen Windkonverters;
- Fig. 2: eine perspektivische Ansicht eines vorschlagsgemäßen Leitelements;
- Fig. 3: eine ausschnittsweise perspektivische Ansicht des vorschlagsgemäßen Windkonverters;
- Fig. 4: einen schematischen Schnitt einer Rotorschaufel;
- Fig. 5: eine perspektivische Ansicht einer vorschlagsgemäßen Rotorschaufel;
- Fig. 6: einen schematischen Schnitt des Windkonverters von oben mit Verlauf der Windströmung / Luftströmungen;
- Fig. 7: einen schematischen Schnitt einer magnetischen Drehlagerung des Rotors;und
- Fig. 8: eine Seitenansicht des erfindungsgemäßen Strömungsverhaltens.

Im Folgenden werden für gleiche oder ähnliche Teile dieselben Bezugszeichen verwendet, wobei dieselben oder ähnliche Eigenschaften und Vorteile erreicht werden können, auch wenn aus Vereinfachungsgründen von einer wiederholten Beschreibung abgesehen wird.

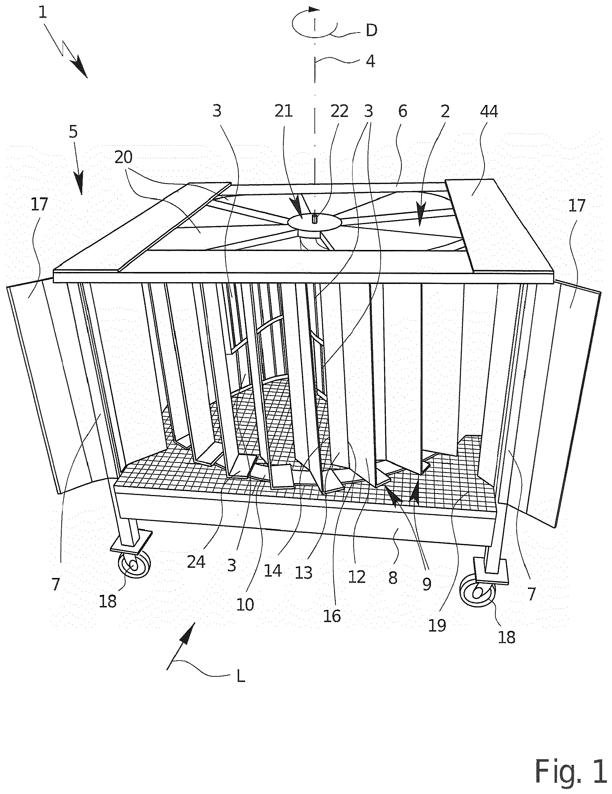

Fig. 1 zeigt eine perspektivische Ansicht eines vorschlagsgemäßen Windkonverters 1 mit einem Rotor 2, der mehrere Rotorschaufeln 3 aufweist. Die Rotorschaufeln 3 sind um eine bevorzugt zentrale Drehachse 4 drehbar gelagert.

Im Folgenden wird der Windkonverter 1 in einer Gebrauchs- beziehungsweise Betriebslage beschrieben, wobei die Drehachse 4 bevorzugt zumindest im Wesentlichen lotrecht beziehungsweise vertikal angeordnet oder ausgerichtet ist. Diese Ausrichtung mit vertikaler Drehachse 4 stellt die Grundlage des erfindungsgemäßen Konzepts dar.

Der Windkonverter 1 weist vorzugsweise ein Gestell 5 auf. Beim Darstellungsbeispiel weist der Windkonverter 1 beziehungsweise das Gestell 5 vorzugsweise ein Oberteil beziehungsweise einen oberen Rahmen 6, Seitenteile 7, insbesondere in Form von Eckstreben, Pfosten, oder dergleichen, und/oder ein Unterteil beziehungsweise einen unteren Rahmen 8 auf.

Der Windkonverter 1 beziehungsweise das Gestell 5 lagert den Rotor 2 drehbar. Auf die Lagerung wird später noch näher eingegangen.

Der Windkonverter 1 weist vorzugsweise eine windoffene, windfangende periphere Ummantelung oder Struktur mit oder aus mehreren Leitelementen 9 auf, um einen Luftstrom L zu leiten, insbesondere auf die Rotorschaufeln 3 zu leiten.

Bei den Leitelementen 9 handelt es sich insbesondere um Leitbleche, Leitplatten oder sonstige vorzugsweise flache beziehungsweise plattenförmige Elemente. Es ist jedoch alternativ oder zusätzlich auch möglich, dass die Leitelemente 9 wulstig, voluminös, flügelförmig oder auf sonstige Weise geformt sind.

Die Leitelemente 9 sind vorzugsweise dazu ausgebildet, den Windbeziehungsweise Luftstrom L schräg (geneigt zur Radialen) auf die Rotorschaufeln 3 und nicht direkt radial in den Rotor 2 zu leiten. Dabei wird eine Anströmung der Rotorschaufeln 3 in im Wesentlichen senkrechter Richtung zu deren Oberfläche angestrebt.

Die Leitelemente 9 sind vorzugsweise aus Aluminiumblech ausgeführt oder hergestellt. Dabei werden sie insbesondere als Stanz- und/oder Biegeteile hergestellt.

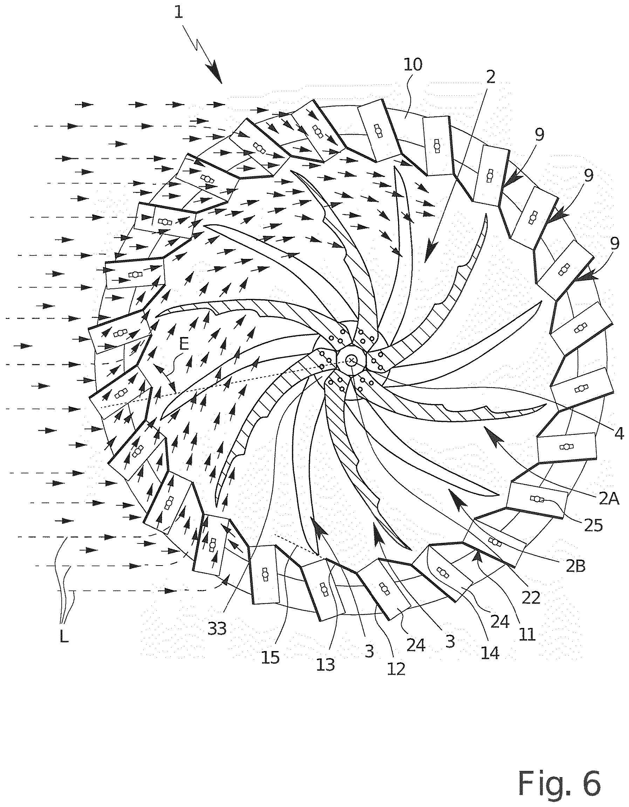

Die Leitelemente 9 sind vorzugsweise um den Rotor 2 beziehungsweise die Rotorschaufeln 3 herum ringförmig angeordnet, wie insbesondere im schematischen Horizontalschnitt gemäß Fig. 6 gezeigt.

Vorzugsweise sind die Leitelemente 9 oben und/oder unten am Gestell 5 beziehungsweise an einem Haltering 10, insbesondere aus Blech, befestigt. Jedoch sind auch andere konstruktive Lösungen möglich.

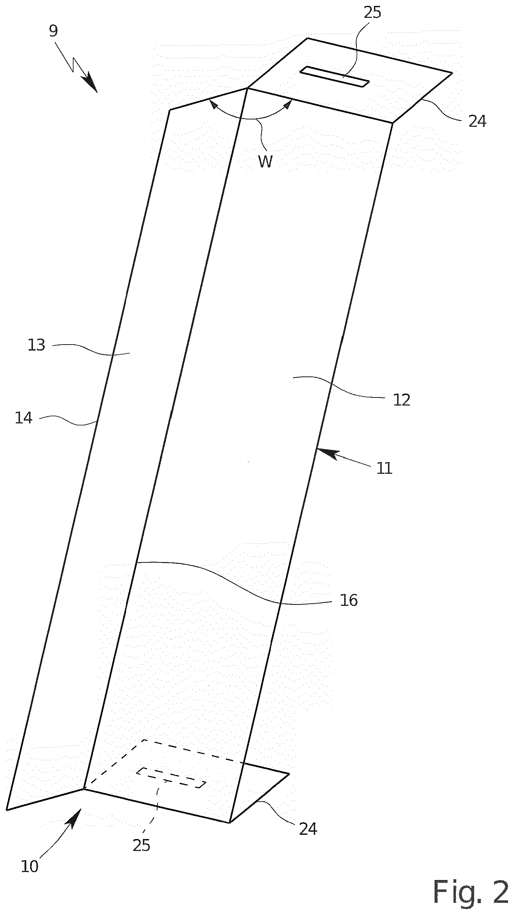

Vorzugsweise weisen die Leitelemente 9 Leitflächen 11 zum Leiten und/oder Umlenken des Winds beziehungsweise der Luft L auf. Dies ist insbesondere in Fig. 2 angedeutet, die ein einzelnes Leitelement 9 in einer perspektivischen Ansicht zeigt.

Die Leitelemente 9 beziehungsweise Leitflächen 11 weisen jeweils vorzugsweise einen dem Rotor 2 abgewandten beziehungsweise fernen Anströmbereich 12 und einen dem Rotor 2 zugewandten beziehungsweise nahen Abströmbereich 13 auf. Der Abströmbereich 13 ist vorzugsweise gegenüber dem Anströmbereich 12 geneigt. Der Übergang 16 kann durch einen Knick oder eine Krümmung gebildet sein, insbesondere mit einer Knick- beziehungsweise Krümmungsachse, die zumindest im Wesentlichen parallel zu der Drehachse 4 verläuft. Besonders bevorzugt ist der Knick beziehungsweise die Krümmung zumindest im Wesentlichen in einem dem Rotor 2 näheren Bereich vorgesehen.

Vorzugsweise erfolgt ein Abknicken vom Rotor 2 weg.

Beim Darstellungsbeispiel ist der Übergang 16 in den Leitflächen 11 durch einen Knick gebildet. Es kann alternativ jedoch auch eine mehr oder weniger kontinuierliche Krümmung vorgesehen sein.

Insbesondere hat der Luftstrom L einen längeren Strömungsweg entlang des Anströmbereichs 12 als entlang des Abströmbereichs 13. Dies hat sich für die Effizienz der Windkonverter 1 als vorteilhaft erwiesen, insbesondere wenn der Luftstrom L auf eines der Leitelemente 9 zumindest im Wesentlichen frontal oder mit einem Winkel trifft, der größer als 45°, insbesondere größer als 50 oder 55° beträgt. In diesem Fall kann der Luftstrom L durch den Anströmbereich 12 in vorteilhafter Weise trotz eines tendenziell eher ungünstigen Eintrittswinkels dem Abströmbereich 13 zugeleitet werden, um im Endeffekt eine Rotorschaufel 3 in einem bevorzugt flachen beziehungsweise schrägen Lufteintrittswinkel E (siehe Fig. 6) Winkel zu erreichen, und den Rotor 2 anzutreiben.

In Fig. 6 sind verschiedene Anströmsituationen schematisch dargestellt. Es ist ersichtlich, dass der Luftstrom L von den Leitelementen 9 beziehungsweise deren Leitflächen 11 vorzugsweise derart abgelenkt beziehungsweise schräg zur Radialen auf die Rotorschaufeln 3 gelenkt wird, dass der Luftstrom nicht radial Eintritte, sondern mit dem jeweiligen Radius beim Eintritt in den Rotor 2 einen Lufteintrittswinkel E von vorzugsweise 10° bis 60° einschließt, wie in Fig. 6 schematisch für einen Luftstrom L angedeutet.

Vorzugsweise ist das rotorseitige Ende 14 des Abströmbereichs 13 beziehungsweise der Abströmbereich 13 der Leitelemente 9 derart ausgerichtet, dass dieses Ende 14 oder dieser Bereich und/oder eine durch das Leitelement 9 vorgegebene Strömungsrichtung zumindest im Wesentlichen mit einem leitelementseitigen beziehungsweise freien Abschnitt oder Ende 15 der Rotorschaufeln 3 fluchtet, wie durch die Linie beziehungsweise Ausrichtung F in Fig. 6 beispielshaft angedeutet.

Der Windkonverter 1 kann Windführungselemente 17 aufweisen, die im Darstellungsbeispiel gemäß Fig. 1 an mehreren oder allen Ecken beziehungsweise Seitenteilen 7, insbesondere vertikalen Holmen beziehungsweise Eckpfosten des Windkonverters 1, angeordnet sind. Insbesondere sind die Windführungselemente 17 an mindestens zwei, vorzugsweise allen Ecken beziehungsweise vier Ecken angeordnet.

Die Windführungselemente 17 ragen nach außen und/oder innen ab und/oder sind vorzugsweise zumindest im Wesentlichen in Vertikale angeordnet, die die Drehachse 4 schneiden beziehungsweise radial verlaufen. Die Windführungselemente 17 können mit ihrer Haupterstreckungsrichtung also zumindest im Wesentlichen radial angeordnet und/oder ausgerichtet sein. Hierdurch wird zumindest im Wesentlichen unabhängig von der konkreten Ausrichtung der Windkonverter 1 eine gute Windernte beziehungsweise Zuführung der Luftströmung L zu den Leitelementen 9 beziehungsweise dem Rotor 2 ermöglicht. Der Windkonverter 1 kann jedoch auch keine oder andere Windführungselemente 17 aufweisen. Durch die Windführungselemente 17 wird die Erntefläche beziehungsweise Windaufnahmefläche vergrößert und wie ein Trichter dem Rotor zugeführt. Somit wird die Effektivität verbessert.

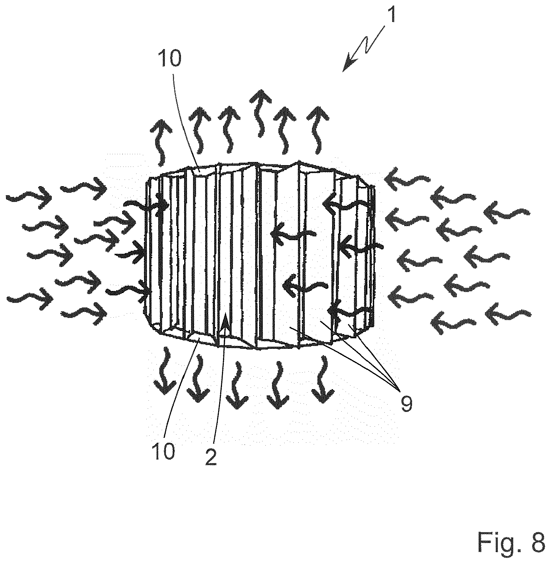

Erfindungsgemäß soll eine horizontale Windströmung vom Windkonverter 1 aufgenommen und zumindest im Wesentlichen in vertikaler Richtung wieder abgegeben werden. Die Fig. 8 zeigt das sich daraus ergebende Strömungsverhalten. Die wellenförmigen Pfeile deuten jeweils die Richtung der jeweiligen lokalen Luftströmung an.

Der Windkonverter 1 ist vorzugsweise verfahrbar ausgebildet. Hierzu weist der Windkonverter 1 vorzugsweise ein Fahrwerk beziehungsweise eine oder mehrere bevorzugt feststellbare Laufrollen 18 auf. Die Laufrollen 18 können beispielsweise an Verlängerungen der Eckholme beziehungsweise Seitenteile 7 befestigt sein. Alternativ oder zusätzlich können die Laufrollen 18 aber auch unmittelbar an dem Unterteil 8 oder an anderen Stellen des Gestells 5 bevorzugt an dessen Unterseite befestigt sein.

Der Windkonverter 1 beziehungsweise das Gestell 5 weist im Darstellungsbeispiel unten bevorzugt ein Gitter oder sonstiges bevorzugt luftdurchlässiges Abdeck- oder Befestigungsmittel für die Leitelemente 9 und/oder den Rotor 2 auf. Im Darstellungsbeispiel ist das Befestigungsmittel als Gitter beziehungsweise Rost 19 ausgebildet. Hier sind jedoch auch andere Lösungen möglich.

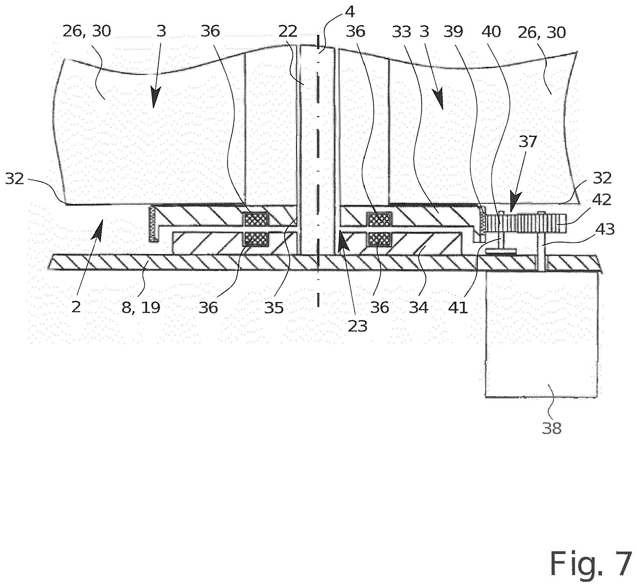

Das Gestell 5 beziehungsweise Oberteil 6 weist vorzugsweise Stege oder sonstige Haltemittel 20 und/oder ein oberes Lager 21 auf, um den Rotor 2 drehbar zu lagern. Im Darstellungsbeispiel wird von dem Haltemittel 20 das obere Lager 21 gehalten, das eine Rotorwelle 22 des Rotors 2 hält oder lagert, wie insbesondere in Fig. 7 gezeigt.

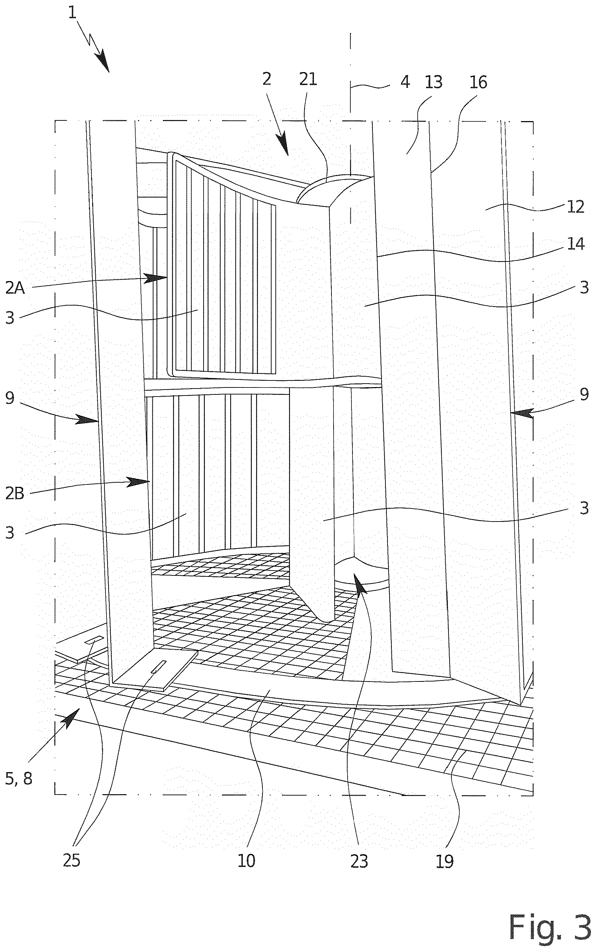

Unten ist der Rotor 2 beziehungsweise dessen Rotorwelle 22 vorzugsweise über ein unteres Lager 23 gehalten oder gelagert, wie in der ausschnittsweisen Vergrößerung gemäß Fig. 3 angedeutet.

Beim Darstellungsbeispiel ist die Rotorwelle 22 vorzugsweise nicht drehbar, sondern nur der Rotor 2. Jedoch kann die Rotorwelle 22 alternativ auch zusammen mit dem Rotor 2 rotieren, also drehfest mit dem Rotor 2 verbunden sein.

Fig. 2 zeigt in einer perspektivischen Darstellung ein einzelnes Leitelement 9 mit der Leitfläche 11 beziehungsweise dem Anströmbereich 12 und dem Abströmbereich 13. Zwischen dem Anströmbereich 12 und dem Abströmbereich 13 ist vorzugsweise ein Winkel W gebildet, der vorzugsweise mehr als 10°, insbesondere mehr als 15°, besonders bevorzugt mehr als 20° oder 25° und/oder weniger als 60°, vorzugsweise weniger als 50°, insbesondere weniger als 40 oder 35°, insbesondere zumindest im Wesentlichen 30° beträgt.

Das Leitelement 9 weist vorzugsweise Befestigungsabschnitte 24 auf, mit denen das Leitelement 9 insbesondere an dem Gestell 5 beziehungsweise an dem oder den Haltering(en) 10 befestigt werden kann. Insbesondere ist das Leitelement 9 schwenkbar oder auf sonstige Weise justierbar. Hierdurch kann die Stellung beziehungsweise Neigung des Leitelements 9 beziehungsweise der Leitfläche 11 insbesondere in Bezug auf die Luftströmung L beziehungsweise zur Drehachse 4 beziehungsweise radialen Ausrichtung einstellbar sein. Dies ermöglicht eine zusätzliche Optimierung beziehungsweise Anpassung an die Windverhältnisse am Montageort beziehungsweise an Standorte beziehungsweise Windzonen.

Beim Darstellungsbeispiel ist das Leitelement 9 vorzugsweise jeweils über seine Befestigungsabschnitte 24 mit dem Gestell 5 beziehungsweise zugeordneten Haltering 10 verbunden, insbesondere verschraubt, besonders bevorzugt verstellbar.

Beim Darstellungsbeispiel weist jeder Befestigungsabschnitt 24 vorzugsweise ein Langloch 25 auf, das von einer nicht dargestellten Schraube durchgriffen werden kann, um den jeweiligen Befestigungsabschnitt 24 mit dem zugeordneten Haltering 10 oder einem sonstigen Bauteil zu verbinden. Jedoch sind auch andere konstruktive Lösungen möglich.

Vorzugsweise sind die Leitelemente 9 in ihrer Neigung beziehungsweise radialen Ausrichtung und/oder in ihrem Abstand zu dem Rotor 2 beziehungsweise den Rotorschaufeln 3 einstellbar. Dies wird besonders bevorzugt durch die Verschraubung und die Langlöcher 25 ermöglicht.

Die Luftströmung L kann auf den Anströmbereich 12 treffen, wird durch diesen in Richtung des Abströmbereichs 13 geleitet und bevorzugt durch den Übergang 16 zu dem Abströmbereich 13 umgelenkt.

In einer nicht dargestellten Alternative kann der Übergang 16 zwischen dem Anströmbereich 12 und dem Abströmbereich 13 kontinuierlich beziehungsweise mit einem Biegeradius erfolgen, der bevorzugt größer als 2 cm, vorzugsweise größer als 4 cm, insbesondere größer als 5 cm oder 8 cm ist. Dies fördert eine unterbrechungsfreie beziehungsweise laminare Strömungsführung. Hierdurch können Strömungsabrisse und Verwirbelungen vermieden beziehungsweise minimiert werden. Strömungsabrisse und Verwirbelungen sind leistungsmindernd und sind normalerweise auch für Geräuschentwickelungen verantwortlich. Beides kann somit minimiert beziehungsweise vermieden werden.

Die Leitelemente 9 sind vorzugsweise derart angeordnet und ausgebildet, dass ein direktes radiales Einströmen von Luft in den Rotor 2 verhindert wird. Fig. 3 zeigt einen Ausschnitt eines vorschlagsgemäßen Windkonverters 1 mit zur besseren Veranschaulichung teilweise entfernten Leitelementen 9. Hierdurch wird eine bessere Sicht auf die noch montierten Leitelemente 9 und auf den Rotor 2 ermöglicht.

Der Rotor 2 weist vorzugsweise einheitlich beziehungsweise gleichartig aufgebaute Rotorschaufeln 3 auf.

Die Rotorschaufeln 3 sind vorzugsweise um die Rotorwelle 22 herum angeordnet und/oder mit dieser mittelbar oder unmittelbar fest verbunden.

Die Rotorschaufeln 3 können auch in mehreren beziehungsweise verschiedenen axialen Ebenen oder axial versetzt angeordnet sein. Es können auch zwei, vorzugsweise koaxiale beziehungsweise übereinander liegende Rotoren 2A und 2B, wie in Fig. 3 angedeutet, gebildet sein, die von einer gemeinsamen Rotorwelle 22 oder von gekoppelten Rotorwellen 22 gehalten sind.

Vorzugsweise sind die Rotorschaufeln 3 sichelförmig beziehungsweise gewölbt oder gekrümmt ausgebildet.

Die Rotorschaufeln 3 weisen eine innere Oberfläche 26 auf, die besonders bevorzugt quer zur Drehachse 4 zumindest im Wesentlichen konkav ist und vom Luftstrom beaufschlagt wird, also luvseitig angeordnet ist. Eine bevorzugte Drehrichtung D des Rotors 2 beziehungsweise der Rotorblätter 3 ist also die der Oberfläche 26 abgewandte Richtung, wie in Fig. 1 angedeutet.

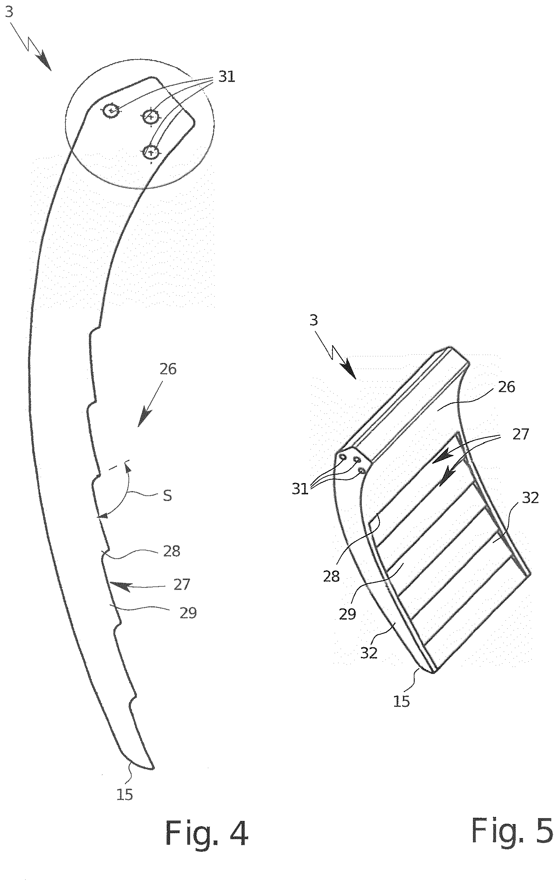

Die Rotorschaufel 3 beziehungsweise deren Oberfläche 26 weist vorzugsweise eine zumindest im Wesentlichen sägezahnförmige Struktur beziehungsweise asymmetrisch ausgebildete Vertiefungen beziehungsweise Ausnehmungen 27 auf, wie in Fig. 4 und 5 gezeigt.

Fig. 4 zeigt einen schematischen Schnitt und Fig. 5 eine perspektivische Ansicht einer vorschlagsgemäßen Rotorschaufel 3. Die Rotorschaufel 3 weist mehrere Ausnehmungen 27 auf, die besonders bevorzugt asymmetrisch ausgebildet sind und/oder parallel zur Drehachse 4 verlaufen. Ein kürzerer Abschnitt 28 ist hierbei dem Rotor 2 beziehungsweise der Drehachse 4 zugewandt beziehungsweise näher und/oder ein längerer Abschnitt 29 ist der Drehachse 4 abgewandt beziehungsweise ferner.

Zwischen dem kürzeren Abschnitt 28 und dem längeren Abschnitt 29 ist vorzugsweise ein Sägezahnwinkel S eingeschlossen oder gebildet. Der Sägezahnwinkel S ist vorzugsweise kleiner als 140°, vorzugsweise kleiner als 120°, insbesondere kleiner als 100° und/oder größer als 70°, vorzugsweise größer als 80°, und beträgt insbesondere zumindest im Wesentlichen 90°. Wichtig ist, dass die Zahnrichtung beziehungsweise Hindernisse gegen den einströmenden Wind- beziehungsweise Luftstrom gerichtet ist beziehungsweise sind.

Der kürzere Abschnitt 28 und der längere Abschnitt 29 können, wie insbesondere im Darstellungsbeispiel, fließend ineinander übergehen. Insbesondere kann der kürzere Abschnitt 28 teilweise oder vollständig durch einen gebogenen Übergangsbereich zwischen dem längeren Abschnitt 29 und dem kürzeren Abschnitt 28 gebildet sein.

Die Oberfläche 26 kann beziehungsweise sollte stufig strukturiert beziehungsweise profiliert sein. Durch die profilierte Oberfläche 26 wird erreicht, dass sich der auf die Rotorschaufel 3 gelenkte Luftstrom L besser verfängt und folglich mehr Energie abgibt und somit den Windkonverter 1 stärker antreibt. Vor allem kann die Anströmung der Rotorschaufeln 3 in jeder Stellung optimal erfolgen, insbesondere zumindest nahezu senkrecht zur jeweiligen Auftreffpunkt des Windes. Somit wird eine optimale Energieabgabe ermöglicht.

Die Rotorschaufel 3 ist vorzugsweise aus einem leichten Schaufel- oder Basismaterial 30 gebildet oder hergestellt. Vorzugsweise wird ein Kunststoff oder Schaumstoff oder Verbundwerkstoff oder dergleichen verwendet beziehungsweise eingesetzt.

Beim Darstellungsbeispiel ist die einzelne Rotorschaufel 3 vorzugsweise zumindest im Wesentlichen nur aus dem Basismaterial 30 hergestellt beziehungsweise aufgebaut.

Vorzugsweise weist die Rotorschaufel 3 verstärkte beziehungsweise verdickte Randbereiche auf. Diese können eine zusätzliche Verstärkung für extreme Starkwinde beziehungsweise für Starkwindzonen bilden.

Vorzugsweise weist die Rotorschaufel 3 einen oder mehrere rippenförmige Randbereiche 32, auf. Diese sind vorzugsweise axial oben und/oder unten angeordnet und/oder erstrecken sich vorzugsweise entlang der Rotorschaufel 3 beziehungsweise am oder im Basismaterial 30 in radialer Richtung, beim Darstellungsbeispiel insbesondere zumindest im Wesentlichen entsprechend gekrümmt wie die Rotorschaufel 3.

Beim Darstellungsbeispiel sind diese Randbereiche 32 ebenfalls aus dem Basismaterial 30 gebildet, insbesondere aus demselben Stück des Basismaterials 30 wie die übrige Rotorschaufel 3. Die Randbereiche 32 weisen vorzugsweise eine durchgehende, insbesondere über die Vertiefungen 27 und/oder Oberfläche 26 vorragende Kante auf. Dies ist einer guten Luftführung zuträglich.

Die Rotorschaufel 3 kann eine oder mehrere Befestigungsmöglichkeiten zum drehfesten unmittelbaren oder mittelbarer Befestigen der Rotorschaufel 3 an der Rotorwelle 22 aufweisen.

Im Darstellungsbeispiel weist die Rotorschaufel 3 vorzugsweise eine oder mehrere Bohrungen beziehungsweise Durchbrüche 31 auf, die insbesondere parallel zur Drehachse 4 beziehungsweise axial durch die Rotorschaufel 3 verlaufen.

Die Rotorschaufeln 3 (eines Rotors 2, 2A, 2B) werden vorzugsweise mittels einer Scheibe oder Platte 33 oben und/oder unten oder mittels einer sonstigen Befestigung gehalten beziehungsweise untereinander und/oder mit der optionalen Rotorwelle 22 verbunden, wie in Fig. 6 und 7 angedeutet. Insbesondere sind die Rotorschaufeln 3 auf der Ober- und/oder Unterseite starr miteinander verbunden.

Besonders bevorzugt greifen die Scheiben beziehungsweise Platten 33 mit Vorsprüngen, Steckverbindungen, wie bolzenartigen Verbindungen, Bolzen oder dergleichen, in die Bohrungen beziehungsweise Durchbrüche 31 der Rotorschaufeln 3 ein, besonders bevorzugt axial, um die Rotorschaufeln 3 zu halten beziehungsweise festzulegen. Steckverbindungen, wie beispielsweise bolzenartige Verbindungen, ermöglichen eine leichte werkzeuglose Montage.

Die Scheiben beziehungsweise Platten 33 können Durchbrüche aufweisen, wobei die Rotorschaufeln 3 durch die Durchbrüche der Scheiben beziehungsweise Platten 33 und die Durchbrüche 31 hindurch befestigt sind, insbesondere mittels Steckverbindungen beziehungsweise bolzenartigen Verbindungen, um die Platten 33 und dazwischen liegenden Rotorschaufeln 3 miteinander axial zu verspannen.

Die Rotorschaufeln 3 können mehrere Hohlräume aufweisen beziehungsweise zumindest im Wesentlichen aus einem aufgeschäumten Material, vorzugsweise XPS-Hartschaum oder PUR-Halbhartschaum, als Basismaterial 30 bestehen. Insbesondere können die Rotorschaufeln 3 beziehungsweise wesentliche Teile davon auch als Formteile, insbesondere als Polyurethan-Formteile aus Integral-Halbhartschaum, ausgebildet sein oder werden. Rotorschaufeln 3 dieser Bauweise erlauben die Bildung der Ausnehmungen 27 unter Aufrechterhaltung der Eigenstabilität der Rotorschaufeln 3 bei gleichzeitig leichter Konstruktion.

Beim Darstellungsbeispiel sind die Rotorschaufeln 3 vorzugsweise mit oder zumindest im Wesentlichen aus Hartschaum gebildet. Dies hat sich als besonders vorteilhaft für eine einfache, kostengünstige und leichte Konstruktion erwiesen.

In synergistischer Weise lassen sich die Rotorschaufeln 3, insbesondere die Oberflächen 26, bei Verwendung eines aufgeschäumten Materials einfach strukturieren. Hier sind jedoch auch andere Realisierungsformen möglich, insbesondere mit einer Wabenstruktur oder dergleichen.

Fig. 6 zeigt in einem schematischen Horizontalschnitt im Bereich des oberen Rotors 2A insbesondere wie die Rotorschaufeln 3 der beiden Rotoren 2A und 2B axial übereinander angeordnet sind. Der Rotor 2A ist hier oben angeordnet, wie in Fig. 3, aber geschnitten dargestellt. Die Rotorschaufeln 3 des oberen Rotors 2A sind unten mit der zugeordneten Halterung, Scheibe beziehungsweise Platte 33 verbunden beziehungsweise von dieser gehalten. Die darunter liegenden Rotorschaufeln 3 des darunter liegenden Rotors 2B können mit derselben Halterung, Scheibe beziehungsweise Platte 33 verbunden oder mit einer separaten darunter liegenden Halterung, Scheibe beziehungsweise Platte 33 verbunden und davon gehalten sein.

Fig. 7 zeigt in einem sehr schematischen, ausschnittsweisen Schnitt einen bevorzugten prinzipiellen Aufbau des unteren Lagers 23. Das obere Lager 21 ist vorzugsweise entsprechend oder ähnlich aufgebaut. Nachfolgend wird daher nur ein bevorzugter Aufbau des unteren Lagers 23 näher erläutert.

Das Lager 23 weist vorzugsweise ein Lagerteil 34 auf, das die Rotorwelle 22 insbesondere radial abstützt oder hält.

Es sind erfindungsgemäß keinerlei Lager oder Gleithülsen zur Achse vorhanden. Erfindungsgemäß ist lediglich ein Luftspalt vorgesehen. Der Luftspalt entsteht durch eine magnetische Lagerung des Rotors. Andersartige Lager, wie beispielsweise Gleitlager, Kugellager oder Rollenlager haben sich für den Erfinder als weniger vorteilhaft in Bezug auf die Erfindung herausgestellt.

Beim Darstellungsbeispiel steht die Rotorwelle 22 vorzugsweise fest und lediglich der Rotor 2 ist drehbar. Jedoch kann die Rotorwelle 22 grundsätzlich auch zusammen mit dem Rotor 2 drehbar sein. In diesem Fall sind der Rotor 2 beziehungsweise die Rotorschaufeln 3 und die Rotorwelle 22 vorzugsweise drehfest miteinander verbunden.

Beim Darstellungsbeispiel ist der Rotor 2 beziehungsweise die Scheibe oder Platte 33 vorzugsweise über das Lagerelement 35 radial abgestützt beziehungsweise geführt, dabei aber drehbar. Jedoch sind auch andere konstruktive Lösungen möglich.

Besonders bevorzugt weist der Windkonverter 1 eine schwebende beziehungsweise magnetische Lagerung für den Rotor 2 auf.

Zur magnetischen Lagerung des Rotors 2 weist das Lager 23 vorzugsweise ein oder mehrere Permanentmagnete 36 auf, die insbesondere in oder an der Platte 33 und/oder dem Lagerteil 34 - besonders bevorzugt ringförmig - angeordnet sind, wie in Fig. 7 angedeutet. Besonders bevorzugt sind Magnetringe 36. Jedoch können auch Einzelmagnete 36 ringförmig angeordnet eingesetzt werden. Die ringförmigen Anordnungen beziehungsweise Magnetringe müssen übereinander beziehungsweise koaxial positioniert sein. Nur so kann das gewünschte axiale Abstoßen beziehungsweise Anheben beziehungsweise Schweben vorzugsweise durch gegenüberliegende Magnete 36 erreicht werden, wie in Fig. 7 angedeutet. Hierbei wird durch das Abstoßen der Schwebezustand verwirklicht.

Beim Darstellungsbeispiel werden besonders bevorzugt Permanentmagnete 36 eingesetzt. Statt Permanentmagneten können jedoch grundsätzlich auch Elektromagnete eingesetzt werden. Diese können bei Bedarf sogar durch den Windkonverter 1 beziehungsweise einen davon angetriebenen Generator 38 bedarfsweise mit Strom versorgt werden. In diesem Fall sollte eventuell ein elektrischer Akkumulator zur Pufferung vorgesehen sein, um die schwebende Lagerung und ein leichtes Anlaufen des Rotors 2 auch bei vorherigem Stillstand zu ermöglichen. Mischlösungen aus PM Magneten und Elektromagneten können hilfreich mit dazu dienen, bei schweren orkanartigen Stürmen zu Bremszwecken eingesetzt werden, um auch Generatoren einen zusätzlichen Überlastungsschutz zu ermöglichen. Bei dem sich ergebenden neuen Strömungsverlauf von Horizontal nach Vertikal findet nach Erkenntnissen des Erfinders ein Überdruck generell Ableitung.

Durch die magnetische Lagerung wird erreicht, dass der Rotor 2 quasi schwebend in axialer Richtung gehalten wird. Dementsprechend kann sich der Rotor 2 sehr leicht drehen. Dies ist einer optimalen Ausnutzung des Windes beziehungsweise der Luftströmung L zuträglich, da hiermit Reibungsverluste minimiert beziehungsweise unterbunden werden.

Die Rotorwelle 22 kann auch zumindest teilweise durch die Rotorschaufeln 3 oder auf sonstige Weise gebildet sein und muss nicht zwingend eine zwischen dem oberen Lager 21 und unteren Lager 23 durchgehende Welle sein. Bevorzugt ist jedoch eine zwischen dem oberen Lager 21 und dem unteren Lager 23 durchgehende Rotorwelle 22, da hierdurch die Stabilität beziehungsweise Statik verbessert werden kann.

Im Darstellungsbeispiel gemäß Fig. 3 sind mehrere, insbesondere zwei Rotoren, 2A und 2B übereinander angeordnet. Es ist also möglich, mehrere Rotoren 2 zu koppeln, insbesondere wobei die Rotorschaufeln 3 dann in Umfangsrichtung versetzt werden, wie in Fig. 6 angedeutet.

Im Darstellungsbeispiel sind die Rotorschaufeln 3 der unterschiedlichen Rotoren 2A und 2B zueinander versetzt, gegeneinander verdreht oder auf sonstige Weise nicht fluchtend zueinander angeordnet. Dies ermöglicht es, die Luftströmung L in eine sehr gleichmäßige und vibrationsarme Drehbewegung des Rotors 2 umzusetzen.

Im Darstellungsbeispiel weisen die Rotoren 2A und 2B vorzugsweise eine gemeinsame Rotorwelle 22 auf und/oder sind um eine gemeinsame Drehachse 4 drehbar gelagert.

Im Darstellungsbeispiel ist der obere Rotor 2A und der untere Rotor 2B gebildet, die vorzugsweise dieselbe Anzahl von Rotorschaufeln 3 aufweisen. Besonders bevorzugt sind die Rotoren 2A, 2B drehfest gekoppelt und/oder derart um die Drehachse 4 zueinander verdreht angeordnet, dass jeweils eine Rotorschaufel 3 einer zwischen zwei Rotorschaufeln 3 gebildeten Lücke des benachbarten Rotors 2A, 2B gegenüberliegt. Beim Beispiel von Rotoren 2 mit jeweils n Rotorblättern bedeutet dies, dass die Rotoren besonders bevorzugt zumindest im Wesentlichen um einen Winkel von 180° geteilt durch n (Anzahl der Rotorschaufeln 3 eines Rotors 2A, 2B) bezüglich der Drehachse 4 gegeneinander verdreht sind. Vorzugsweise beträgt die Verdrehung mindestens 90° geteilt durch n und/oder höchstens 270° geteilt durch n.

Der vorschlagsgemäße Windkonverter 1 kann in besonders vorteilhafter Weise modular aufgebaut oder weitergebildet werden. Hierzu kann vorgesehen sein, dass in einem Windkonvertersystem mehrere separate Windkonverter 1 vorgesehen beziehungsweise gekoppelt sind. In Bezug auf das Darstellungsbeispiel ist es beispielsweise möglich, dass mehrere der gezeigten Windkonverter 1 übereinander platziert werden, insbesondere mit koaxialen Drehachsen 4. Hierzu können Verbindungsmittel vorgesehen sein, um die Windkonverter 1 miteinander zu verbinden.

Die Rotorwellen 22 oder Rotoren 2 werden vorzugsweise drehfest beziehungsweise abtriebsmäßig miteinander gekoppelt oder der verbunden, ebenso ist ein kompletter Austausch der Welle zur Anpassung an die zu koppelnden Module (Anzahl der Rotoreinheiten möglich.

Alternativ kann vorgesehen sein, dass die Rotoren 2 der unterschiedlichen Windkonverter 1 zueinander axial versetzt angeordnet werden. Auch hier können die Rotoren 2 der kombinierten Windkonverter 1 drehfest beziehungsweise abtriebsmäßig miteinander verbunden oder gekoppelt werden.

Alternativ oder zusätzlich können die jeweiligen Windkonverter 1 ebenfalls mehrere Rotoren 2, insbesondere in der beschriebenen Anordnung zueinander, aufweisen, wie in Fig. 3 dargestellt. Bei mehr als zwei Rotoren 2 können die Rotoren 2 zumindest im Wesentlichen 360° geteilt durch die Anzahl der Rotoren 2 und zusätzlich geteilt durch die Anzahl der Rotorblätter 3 pro Rotor 2, insbesondere plus/minus 10° oder 20°, zueinander verdreht sein. Hierdurch wird ein besonders gleichmäßiger Antrieb ermöglicht.

Der vorschlagsgemäße Windkonverter 1 beziehungsweise das vorschlagsgemäße Windkonvertersystem kann einen Generator 38 aufweisen beziehungsweise antreiben beziehungsweise mit diesem eine vorschlagsgemäße Windkraftanlage bilden, wie in Fig. 7 angedeutet.

Der Generator 38 ist mit dem Rotor 2 insbesondere über ein Getriebe 37, besonders bevorzugt ein Zahnradgetriebe, antriebsmäßig verbunden beziehungsweise gekoppelt. Bedarfsweise kann der Generator 38 auch über einen Riemen, ein Gestänge oder auf sonstige Weise direkt oder indirekt mit dem Rotor 2 beziehungsweise den Rotoren 2 oder der Rotorwelle 22 antriebsmäßig gekoppelt werden.

Mittels des Generators 38 kann mit dem Windkonverter 1 beziehungsweise dem Windkonvertersystem eine Windkraftanlage gebildet werden.

Bevorzugt ist der Generator 38 dazu ausgebildet, eine Drehbewegung des Rotors 2 in elektrischen Strom umzuwandeln.

Der Windkonverter 1 kann jedoch alternativ oder zusätzlich auch eine Pumpe oder ein sonstiges Gerät zur Nutzung der Drehbewegung des Rotors 2 antreiben.

Bevorzugt ist der Generator 38 an der Unterseite beziehungsweise am Unterteil 8 oder Rost 19 der Anordnung 1 beziehungsweise des Gestells 5 angeordnet.

Beim Darstellungsbeispiel weist der Rotor 2 beziehungsweise die Scheibe oder Platte 33 vorzugsweise eine Verzahnung beziehungsweise einen Zahnkranz, insbesondere eine Außenverzahnung 39, auf, wie in Fig. 7 angedeutet.

Das Getriebe 37 weist vorzugsweise mindestens ein Zahnrad 40 auf, das hier vorzugsweise über einen Lagerbock 41 am Windkonverter 1 beziehungsweise Unterteil 8 oder Rost 19 drehbar gelagert sind. Jedoch sind auch andere konstruktive Lösungen möglich.

Das Getriebe 37 beziehungsweise Zahnrad 40 (treibende Zahnrad) treibt beim Darstellungsbeispiel den Generator 38, insbesondere ein Zahnrad oder Antriebsrad 42 (getriebenes Zahnrad) des Generators 38 an. Das Antriebsrad 42 sitzt vorzugsweise auf einer Antriebswelle 43, die sich durch das Unterteil 8 beziehungsweise den Rost 19 oder dergleichen zu dem oder in den Generator 38 erstreckt. Jedoch sind auch andere konstruktive Lösungen möglich.

Beim Darstellungsbeispiel kämmt das Getriebe 37 beziehungsweise dessen Zahnrad 40 einerseits mit dem Zahnkranz beziehungsweise der Außenverzahnung 39 und andererseits mit dem Antriebsrad 42. Jedoch sind auch andere konstruktive Lösungen möglich.

Eine Luftströmung L, die auf den Windkonverter 1 trifft, kann den Rotor 2 in eine Drehbewegung versetzen. Hierzu ist bevorzugt, dass die Rotorschaufeln 3 durch die Luftströmung L in Leerichtung gedrückt werden, wodurch der Rotor 2 in Rotation versetzt wird. Die Drehbewegung des Rotors 2 kann von dem Generator 38 in elektrischen Strom oder dergleichen umgewandelt werden. Es sind jedoch auch andere Nutzungsformen des Windkonverter 1 denkbar.

Folgende Aspekte können alternativ oder zusätzlich zu den zuvor beschriebenen Aspekten realisiert werden:
Der Windkonverter 1 kann zur Umwandlung von strömender Luft in Rotationsenergie und/oder zur Umwandlung von Rotationsenergie in elektrische Energie, insbesondere mittels des Generators 38, ausgebildet sein.

Der Windkonverter 1 kann eine vertikale und/oder offene Ummantelung aufweisen beziehungsweise bilden. Die Ummantelung wird vorzugsweise aus windfangenden, windführenden oder windleitenden Strömungsblechen, Platten oder dergleichen, insbesondere den Leitelementen 9, gebildet. Die Leitelemente 9 sind vorzugsweise vertikal angeordnet. Durch die Leitelemente 9 kann die Sicht auf rotierende Elemente beziehungsweise auf den Rotor 2 minimiert werden. Alternativ oder zusätzlich kann unmittelbar radiales Einströmen von Luft verhindert werden.

Der Windkonverter 1 beziehungsweise das Gestell 5 kann ein Podest aufweisen oder bilden. Das Podest kann das Unterteil 8 aufweisen oder Teil des Unterteils 8 bilden. Mit dem Podest verbunden können windeinfangende Leitbleche, insbesondere Windführungselemente 17, vorgesehen sein, die den Radius beziehungsweise Durchmesser der genutzten Fläche beziehungsweise Windfläche insbesondere in den Randbereichen des Windkonverters 1 vergrößert. Hierdurch kann ein Trichtereffekt erzeugt beziehungsweise gebildet werden. Hierdurch kann die Effizienz des Windkonverters 1 verbessert werden.

Der Windkonverter 1 ist vorzugsweise dazu ausgebildet, Luftströmungen L von außen nach innen beziehungsweise in den Windkonverter 1 hineinzuleiten, was zu einer Drucksteigerung beziehungsweise Leistungsverstärkung führt.

Der Windkonverter 1 weist vorzugsweise windaufnehmende, rotierende Elemente, insbesondere Rotorschaufeln 3 auf. Die Rotorschaufeln 3 sind vorzugsweise im Inneren des Windkonverters 1 angeordnet.

Der Windkonverter 1 ist vorzugsweise dazu ausgebildet, ein Entweichen von Luft in die vertikale Richtung beziehungsweise nach oben und/oder unten zu ermöglichen. Insbesondere kann Wind, der in den Windkonverter 1 eintritt, vertikal entweichen. Auf diese Weise kann insbesondere der Generator 38 gekühlt werden.

Der Windkonverter 1 ist dazu ausgebildet, ein Entweichen von Luft in die vertikale Richtung beziehungsweise nach oben und/oder unten zu ermöglichen. Insbesondere kann Wind, der in den Windkonverter 1 eintritt, vertikal entweichen. Auf diese Weise kann insbesondere ein Entweichen von Luftströmungen (Windenergie) in horizontaler Richtung minimiert / verhindert werden, so dass Verwirbelungen auf der windabgewandten Seite, wie bei bekannten horizontalen und vertikalen Bauformen, minimiert beziehungsweise vermieden werden können.

Der Windkonverter 1 beziehungsweise ein mit dem Windkonverter 1 gebildetes Windkonvertersystem oder eine mit dem Windkonverter 1 beziehungsweise dem Windkonvertersystem gebildete Windkraftanlage kann modular aufgebaut sein. Hierzu kann vorgesehen sein, dass mehrere bevorzugt zumindest im Wesentlichen baugleiche Module, insbesondere Windkonverter 1, aufeinander gesetzt, vertikal übereinander montiert und/oder in Bezug auf Rotorwellen 22 miteinander verbindbar sind beziehungsweise verbunden werden. Diese Modulbauweise, also das Aufeinandersetzen mehrerer Windkonverter 1 bei gleichen Bauteilen auf gleicher Grundfläche, ist bevorzugt.

Der Generator 38 kann durch den Rotor 2 direkt angetrieben werden. Alternativ oder zusätzlich können Übertragungen, wie Zahnradübersetzungen oder sonstige Getriebe, vorgesehen sein, um eine Drehbewegung des Rotors 2 auf den Generator 38 zu übertragen. Hier sind jedoch auch andere Lösungen denkbar.

Der Windkonverter 1 kann ein Podest mit mindestens drei, bevorzugt vier Füßen aufweisen. Es ist bevorzugt, dass das Podest beziehungsweise das Unterteil 8 einen Abstand vom Boden aufweist oder ermöglicht. Insbesondere kann ein Abstand zwischen dem Rotor 2 und dem Boden realisiert werden, der größer als 20 cm, vorzugsweise größer als 30 cm und/oder geringer als 60 cm, vorzugsweise geringer als 50 cm, insbesondere zumindest im Wesentlichen als 40 cm sein.

Gemäß einem Aspekt der vorliegenden Erfindung kann der Generator 38 auf der Unterseite des Windkonverters 1 mit dem Rotor 2 verbunden sein. Der Generator 38 kann also unterhalb des Rotors 2 angeordnet oder an der Unterseite der Unterkonstruktion, wie an einem Podest oder Sockel, angeordnet beziehungsweise befestigt sein. Hier sind jedoch auch andere Alternativen möglich.

Der Windkonverter 1, das Windkonvertersystem beziehungsweise die Windkraftanlage können fahrbar, transportabel, mobil oder auf sonstige Weise beweglich ausgebildet sein.

Der Windkonverter 1, das Windkonvertersystem und/oder die Windkraftanlage können fest oder reversibel montierbar sein. Insbesondere ist eine Montage auf festen und tragbaren Untergründen, insbesondere ohne zusätzliche Masten oder Fundamente möglich. Hier sind jedoch auch andere bekannte Alternativen möglich, wie bei anderen Bauformen bekannt.

Gemäß einem weiteren Aspekt der vorliegenden Erfindung kann der Windkonverter 1 mit einem Schutz, Schutznetz oder einem sonstigen, vorzugsweise engmaschigen Schutz gegen eindringende Lebewesen versehen sein. Engmaschig ist vorzugsweise ein Material, das Öffnungen mit einem Durchmesser aufweist, der geringer als 10 cm, vorzugsweise geringer als 5 cm, insbesondere geringer als 4 cm ist.

Es ist möglich, dass der Windkonverter 1 beziehungsweise dessen Oberteil 6 eine Photovoltaikeinrichtung 44 trägt, wie in Fig. 1 angedeutet. Insbesondere kann der Windkonverter 1 eine Abdeckung aufweisen, die Solarzellen aufweist oder aus Solarzellen gebildet ist.

Die Leitelemente 9 sind vorzugsweise umlaufend um den Rotor 2 angeordnet. Hierdurch kann ein Betrieb ermöglicht werden, der von der Richtung, aus der der Wind kommt, unabhängig ist. Der Windkonverter 1 ist also vorzugsweise dazu ausgebildet, dass Luftströmungen L aus unterschiedlichen Richtungen, insbesondere gleichzeitig, genutzt und insbesondere zum Antrieb auf die Rotorschaufeln 3 geleitet werden können.

Es ist bevorzugt, dass der Windkonverter 1 einen in Bezug auf die Drehachse 4 zumindest im Wesentlichen symmetrischen Aufbau aufweist. Insbesondere können die Leitelemente 9 kreisförmig um die Drehachse 4 angeordnet sein. Die Ausrichtung der Leitelemente 9 erfolgt jedoch nicht radial, sondern zur Strömungsleitung zwischen tangential und radial.

Im Darstellungsbeispiel sind zwei vertikal zueinander versetzt angeordneten Rotoren 2 mit jeweils bevorzugt mehr als zwei, vorzugsweise mehr als drei, insbesondere mehr als vier oder fünf und/oder weniger als neun, vorzugsweise weniger als acht oder sieben, besonders bevorzugt sechs Rotorschaufeln 3 beziehungsweise Windschaufeln vorgesehen.

Das Darstellungsbeispiel bildet vorzugsweise ein Modul beziehungsweise eine Anordnung mit zweimal sechs Rotorschaufeln 3, die zueinander versetzt sind.

Mehrere Module lassen sich aufeinandersetzen beziehungsweise übereinander anordnen und koppeln, um eine Leistungssteigerung bei gleichen Bauteilen auf gleicher Grundfläche zu erreichen.

Die Rotorschaufeln 3 weisen vorzugsweise mehr als zwei, insbesondere mehr als drei und/oder weniger als acht, insbesondere weniger als sieben, besonders bevorzugt fünf Ausnehmungen 27 beziehungsweise Sägezähne auf. Hierdurch lässt sich der in den Windkonverter 1 zum Antrieb des Rotors 2 einströmende Luftstrom L besonders effektiv nutzen.

Die Rotorschaufeln 3 sind vorzugsweise aus einem aufgeschäumten Material beziehungsweise Hartschaum gebildet. Besonders bevorzugt wird ein thermoplastischer Schaumguss (TSG) insbesondere von oder mit PUR-Halbhartschaum verwendet. Die Rotorschaufeln 3 beziehungsweise das Basismaterial 30 kann eine insbesondere UV-beständige Oberflächenbeschichtung aufweisen.

**Bezugszeichenliste**

| | | | |
|---|---|---|---|
| 1 | Windkonverter | 32 | Randbereich |
| 2 | Rotor | 33 | Platte |
| 3 | Rotorblatt | 34 | Lagerteil |
| 4 | Drehachse | 35 | Lagerelement |
| 5 | Gestell | 36 | Magnet |
| 6 | Oberteil | 37 | Getriebe |
| 7 | Seitenteil | 38 | Generator |
| 8 | Unterteil | 39 | Außenverzahnung |
| 9 | Leitelement | 40 | Zahnrad |
| 10 | Haltering | 41 | Lagerbock |
| 11 | Leitfläche | 42 | Antriebsrad |
| 12 | Anströmbereich | 43 | Antriebswelle |
| 13 | Abströmbereich | 44 | Photovoltaikeinrichtung |
| 14 | rotorseitiges Ende | | |
| 15 | leitelementseitiges Ende | D | Drehrichtung |
| 16 | Übergang | E | Lufteintrittswinkel |
| 17 | Windführungselemente | F | Ausrichtung |
| 18 | Laufrollen | L | Luftstrom |
| 19 | Rost | S | Sägezahnwinkel |
| 20 | Haltemittel | W | Winkel |
| 21 | oberes Lager | | |
| 22 | Rotorwelle | | |
| 23 | unteres Lager | | |
| 24 | Befestigungsabschnitt | | |
| 25 | Langloch | | |
| 26 | Oberfläche | | |
| 27 | Ausnehmung | | |
| 28 | kürzerer Abschnitt | | |
| 29 | längerer Abschnitt | | |
| 30 | Basismaterial | | |
| 31 | Durchbruch | | |

## Patentansprüche

1. Windkonverter (1) für Klein-Windkraftanlagen, mit einem Rotor (2), der mehrere Rotorschaufeln (3) aufweist, die um eine vertikale Drehachse (4) drehbar gelagert sind, wobei der Windkonverter (1) mehrere Leitelemente (9) aufweist, wobei die Leitelemente (9) dazu ausgebildet sind, einen Luftstrom (L) auf die Rotorschaufeln (3) zu richten und wobei die Leitelemente (9) jeweils eine Leitfläche (11) zum Leiten und/oder Umlenken von Luft aufweisen, wobei die Leitfläche (11) einen rotorfernen Anströmbereich (12) und einen rotornahen Abströmbereich (13) aufweist,
a) wobei der Abströmbereich (13) gegenüber dem Anströmbereich (12) geneigt und im Schnitt senkrecht zur Drehachse (4) kürzer als der Anströmbereich (12) ist; und
b) wobei ein rotorseitiges Ende (14) des Abströmbereichs (13) zumindest zeitweilig zumindest im Wesentlichen mit einem leitelementseitigen Ende (15) einer Rotorschaufel (3) fluchtet, und
c) wobei die zumindest im Wesentlichen in horizontaler Richtung einströmende Luft nach Kontakt mit dem Rotor (2) zumindest im Wesentlichen in vertikaler Richtung und/oder parallel zur Drehachse (4) ausströmen kann.

2. Windkonverter (1) gemäß Anspruch 1, **dadurch gekennzeichnet, dass** ein Einströmwinkel (E), mit dem ein Luftstrom (L) auf die Rotorschaufeln (3) richtbar ist, durch die Leitelemente (9) einstellbar beziehungsweise verstellbar ist.

3. Windkonverter nach Anspruch 1 oder 2, **dadurch gekennzeichnet, dass** die Rotorschaufeln (3) von einem Luftstrom (L) zumindest im Wesentlichen nur schräg beziehungsweise mit einer Umfangskomponente angeströmt werden beziehungsweise anströmbar sind.

4. Windkonverter nach einem der vorhergehenden Ansprüche, **dadurch gekennzeichnet, dass** aufgrund der sägezahnartigen und/oder stufenförmigen Struktur der Rotorschaufeln (3) eine optimale Anströmung der Rotorschaufeln (3) über weite Winkelbereiche in Bezug auf die Luftströmung gewährleistet ist, insbesondere in Kombination mit den Leitelementen (9).

5. Windkonverter (1) gemäß einem der voranstehenden Ansprüche, **dadurch gekennzeichnet, dass** der Windkonverter (1) verfahrbar ausgebildet ist, vorzugsweise wobei der Windkonverter (1) mehrere bevorzugt feststellbare Laufrollen (18) aufweist.

6. Windkonverter (1) gemäß einem der voranstehenden Ansprüche, **dadurch gekennzeichnet, dass** mindestens eine der Rotorschaufeln (3) eine zumindest im Wesentlichen konkav geformte und/oder luvseitige Oberfläche (26) aufweist, die eine zumindest im Wesentlichen sägezahnförmige und/oder stufenartige Struktur und/oder asymmetrische Ausnehmungen (27) aufweist, wobei vorzugsweise ein kürzerer Abschnitt (28) eines Sägezahns der sägezahnförmigen Struktur und/oder der asymmetrisch gebildeten Ausnehmungen (27) der Drehachse (4) zugewandt und/oder drehachsennäher als ein längerer Abschnitt (29) ist, und/oder wobei vorzugsweise ein Abschnitt einer Stufe der stufenartigen Struktur zumindest im Wesentlichen senkrecht zur Hauptströmungsrichtung ausgerichtet ist.

7. Windkonverter (1) gemäß einem der voranstehenden Ansprüche, **dadurch gekennzeichnet, dass** mindestens eine der Rotorschaufeln (3) mehrere Hohlräume aufweist und/oder zumindest im Wesentlichen aus einem aufgeschäumten Material (30) besteht, insbesondere wobei die Rotorschaufel (3) eine zumindest abschnittsweise strukturierte Oberfläche (26) und/oder mehrere Ausnehmungen (27) aufweist.

8. Windkonverter (1) gemäß einem der voranstehenden Ansprüche, **dadurch gekennzeichnet, dass** die Rotorschaufeln (3) in zwei oder mehr Ebenen beziehungsweise Lagen mit koaxialer Drehachse (4) und in Umfangsrichtung versetzt angeordnet sind, wobei vorzugsweise die Ebenen beziehungsweise Lagen von Rotorschaufeln (3) gemeinsam den Rotor (2) bilden, und/oder wobei die Ebenen beziehungsweise Lagen von Rotorschaufeln (3) gekoppelt sind, vorzugsweise kraftschlüssig, und/oder wobei die Rotorschaufeln (3) der Ebenen zur Verbesserung der Anströmung nicht fluchtend zueinander angeordnet sind.

9. Windkonverter (1) gemäß einem der voranstehenden Ansprüche, **dadurch gekennzeichnet, dass** der Rotor (2) verlustfrei, magnetisch beziehungsweise schwebend gelagert ist.

10. Windkonverter nach einem der vorhergehenden Ansprüche, **dadurch gekennzeichnet, dass** am Rotor (2) zumindest im Wesentlichen aus einem aufgeschäumten Material gebildete Rotorschaufeln (3) befestigt sind.

11. Windkonverter (1) gemäß einem der voranstehenden Ansprüche, **dadurch gekennzeichnet, dass** der Windkonverter (1) windeinfangende und windführende, über den Umfang des Rotors (2) verteilt angeordnete Leitelemente (9) und/oder Windführungselemente (17) aufweist, um eine offene Struktur zu bilden und/oder um sägezahnartige Profile bzw. Strukturen der Rotorschaufeln (3) über mehrere Leitelemente (9) mehrfach und gleichzeitig mit Wind zu beaufschlagen.

12. Windkonverter gemäß einem der voranstehenden Ansprüche, **dadurch gekennzeichnet, dass** mehrere Rotoren (2A, 2B) mit jeweils mehreren Rotorschaufeln (3) koaxial zueinander angeordnet sind, vorzugsweise wobei die Rotorschaufeln (3) eines der Rotoren (2A) gegenüber den Rotorschaufeln (3) des anderen Rotors (2B) versetzt beziehungsweise verdreht sind und/oder wobei mehrere Rotoren (2A, 2B) mit jeweils mehreren Rotorschaufeln (3) um eine gemeinsame Drehachse (4) drehbar sind und/oder eine gemeinsame Rotorwelle (22) aufweisen.

13. Windkonverter gemäß einem der voranstehenden Ansprüche, **dadurch gekennzeichnet, dass** die Rotorschaufeln (3) sichelförmig ausgebildet sind, insbesondere ausgehend von der Drehachse (4) nach außen zu einem freien Ende (15) hin, und/oder dass der Windkonverter (1) beziehungsweise dessen Gestell (5) umfangsseitig und/oder oben und/oder unten eine für Wind beziehungsweise Luft (L) offene Struktur aufweist oder bildet und/oder dass die Rotorschaufeln (3) sich von der Drehachse (4) bis zum äußeren Umfang des Rotors (2) erstrecken, vorzugsweise durchgängig und/oder jeweils mit konstanten Abmessungen in vertikaler Richtung.

14. Windkonvertersystem mit mehreren, als separate Module ausgebildeten Windkonvertern (1) gemäß einem der voranstehenden Ansprüche.

15. Windkonvertersystem gemäß Anspruch 14, **dadurch gekennzeichnet, dass** die Windkonverter (1) axial zueinander und/oder übereinander angeordnet sind, wobei vorzugsweise die Rotoren (2) der Windkonverter (1) um eine gemeinsame Drehachse (4) drehbar gelagert sind, und/oder wobei die Rotoren (2) derWindkonverter (1) eine gemeinsame Rotorwelle (22) aufweisen, und/oder wobei die Rotoren (2) mehrerer, vorzugsweise aller Windkonverter (1) miteinander gekoppelt sind, insbesondere kraftschlüssig.

16. Windkraftanlage mit wenigstens einem Windkonverter (1) gemäß einem derAnsprüche 1 bis 13 oder mit wenigstens einem Windkonvertersystem gemäß Anspruch 14, und mit wenigstens einem Generator (38), der durch den wenigstens einen Windkonverter (1), vorzugsweise mittels des wenigstens einen Rotors (2) antreibbar ist.

## Claims

1. Wind converter (1) for small wind turbines, having a rotor (2) which has a plurality of rotor blades (3) which are mounted rotatably about a vertical axis of rotation (4), the wind converter (1) having a plurality of guide elements (9), the guide elements (9) being designed to direct an air flow (L) onto the rotor blades (3), and the guide elements (9) each having a guide surface (11) for guiding and/or deflecting air, the guide surface (11) being designed to guide and/or deflect the air flow (L) onto the rotor blades (3), and the guide elements (9) each having a guide surface (11) for guiding and/or deflecting air, the guide surface (11) being designed to guide and/or deflect the air flow (L) onto the rotor blades (3), the guide surface (11) having an inflow area (12) remote from the rotor and an outflow region (13) close to the rotor,
a) wherein
the outflow region (13) is inclined with respect to the inflow region (12) and, in cross-section is shorter in perpendicular to the axis of rotation (4) than the inflow region (12); and
b) wherein
an end on the rotor side (14) of the outflow region (13) is at least temporarily at least substantially aligned with an end on the guide element side (15) of a rotor blade (3), and
c) wherein
the air flowing in at least substantially in horizontal direction after contact with the rotor (2) is able to flow out at least substantially in the vertical direction and/or parallel to the axis of rotation (4).

2. Wind converter (1) according to claim 1, **characterized in that** an inflow angle (E), with which an air flow (L) can be directed onto the rotor blades (3), can be set or adjusted by the guide elements (9).

3. Wind converter according to claim 1 or 2, **characterised in that in that** the rotor blades (3) are flowed against or can be flowed against by an air flow (L) at least substantially only obliquely or with a circumferential component.

4. Wind converter according to one of the preceding claims, **characterised in that,** due to the saw-tooth-like and/or step-like structure of the rotor blades (3), an optimum incident flow of the rotor blades (3) over wide angular ranges with respect to the air flow is ensured, in particular in combination with the guide elements (9).

5. Wind converter (1) according to one of the preceding claims, **characterised in that** the wind converter (1) is designed to be movable, preferably wherein the wind converter (1) has several preferably lockable rollers (18).

6. Wind converter (1) according to one of the preceding claims, **characterized in that** at least one of the rotor blades (3) has an at least substantially concave-shaped and/or windward-side surface (26) which has an at least substantially saw-tooth-shaped and/or step-like structure and/or asymmetrical recesses (27), wherein preferably a shorter portion (28) of a saw tooth of the saw-tooth-shaped structure and/or the asymmetrically formed recesses (27) faces the axis of rotation (4) and/or is closer to the axis of rotation than a longer portion (29), and/or wherein preferably a portion of a step of the step-like structure is oriented at least substantially perpendicular to the main flow direction.

7. Wind converter (1) according to one of the preceding claims, **characterized in that** at least one of the rotor blades (3) has a plurality of cavities and/or consists at least substantially of a foamed material (30), in particular wherein the rotor blade (3) has a surface (26) structured at least in sections and/or with a plurality of recesses (27).

8. Wind converter (1) according to one of the preceding claims, **characterized in that** the rotor blades (3) are arranged in two or more planes or layers with a coaxial axis of rotation (4) and offset in the circumferential direction, wherein preferably the planes or layers of rotor blades (3) together form the rotor (2), and/or wherein the planes or layers of rotor blades (3) are coupled, preferably force-locking, and/or wherein the rotor blades (3) of the planes are not arranged in alignment with one another in order to improve the incident flow.

9. Wind converter (1) according to one of the preceding claims, **characterised in that** the rotor (2) is mounted loss-free, magnetically or suspended.

10. Wind converter according to one of the preceding claims, **characterised in that** rotor blades (3) formed at least substantially from a foamed material are attached to the rotor (2).

11. Wind converter (1) according to one of the preceding claims, **characterised in that** the wind converter (1) has wind-catching and wind-guiding guide elements (9) and/or wind-guiding elements (17) distributed over the circumference of the rotor (2) in order to form an open structure and/or in order to apply wind to sawtooth-like profiles or structures of the rotor blades (3) several times and simultaneously via several guide elements (9).

12. Wind converter according to one of the preceding claims, **characterised in that** a plurality of rotors (2A, 2B), each with a plurality of rotor blades (3), are arranged coaxially with one another, preferably wherein the rotor blades (3) of one of the rotors (2A) are offset or twisted relative to the rotor blades (3) of the other rotor (2B) and/or wherein a plurality of rotors (2A, 2B) each with a plurality of rotor blades (3) are rotatable about a common axis of rotation (4) and/or have a common rotor shaft (22).

13. Wind converter according to one of the preceding claims, **characterized in that** the rotor blades (3) are crescent-shaped, in particular starting from the axis of rotation (4) outwards towards a free end (15), and/or **in that** the wind converter (1) or its frame (5) has or forms a structure open to wind or air (L) on the circumference and/or at the top and/or at the bottom and/or **in that** the rotor blades (3) extend from the axis of rotation (4) to the outer circumference of the rotor (2), preferably continuously and/or in each case with constant dimensions in the vertical direction.

14. Wind converter system with several wind converters (1) formed as separate modules according to one of the preceding claims.

15. Wind converter system according to claim 14, **characterised in that** the wind converters (1) are arranged axially with respect to one another and/or one above the other, preferably the rotors (2) of the wind converters (1) being mounted rotatably about a common axis of rotation (4), and/or the rotors (2) of the wind converters (1) having a common rotor shaft (22), and/or the rotors (2) of a plurality of, preferably all, wind converters (1) being coupled to one another, in particular force-locking.

16. A wind power plant with at least one wind converter (1) according to one of claims 1 to 13 or with at least one wind converter system according to claim 14, and with at least one generator (38) which can be driven by the at least one wind converter (1), preferably by means of the at least one rotor (2).

## Revendications

1. Convertisseur de vent (1) pour petites éoliennes, avec un rotor (2) qui présente plusieurs pales de rotor (3) qui sont logées de manière rotative autour d'un axe de rotation vertical (4), le convertisseur de vent (1) présentant plusieurs éléments de guidage (9), les éléments de guidage (9) étant conçus pour, à diriger un flux d'air (L) sur les pales de rotor (3) et les éléments de guidage (9) présentant chacun une surface de guidage (11) pour guider et/ou dévier l'air, la surface de guidage (11) présentant une zone d'afflux (12) éloignée du rotor et une zone d'écoulement (13) proche du rotor,
a) la zone d'écoulement (13) étant inclinée par rapport à la zone d'afflux (12) et étant plus courte que la zone d'afflux (12) en coupe perpendiculaire à l'axe de rotation (4) ; et
b) une extrémité (14) côté rotor de la zone d'écoulement (13) étant au moins temporairement au moins sensiblement alignée avec une extrémité (15) côté élément de guidage d'une pale de rotor (3), et
c) l'air entrant au moins sensiblement en direction horizontale pouvant s'écouler après contact avec le rotor (2) au moins sensiblement en direction verticale et/ou parallèlement à l'axe de rotation (4).

2. Convertisseur de vent (1) selon la revendication 1, **caractérisé en ce qu'**un angle d'entrée (E), avec lequel un flux d'air (L) peut être dirigé sur les aubes de rotor (3), peut être réglé ou ajusté par les éléments de guidage (9).

3. Convertisseur de vent selon la revendication 1 ou 2, **caractérisé en ce que** les aubes de rotor (3) ne sont ou ne peuvent être touchées par un flux d'air (L) au moins essentiellement qu'en biais ou avec une composante périphérique.

4. Convertisseur de vent selon l'une des revendications précédentes, **caractérisé en ce que** la structure en dents de scie et/ou en escalier des aubes de rotor (3) garantit un écoulement optimal des aubes de rotor (3) sur de larges zones angulaires par rapport à l'écoulement d'air, en particulier en combinaison avec les éléments de guidage (9).

5. Convertisseur de vent (1) selon l'une des revendications précédentes, **caractérisé en ce que** le convertisseur de vent (1) est conçu de manière à pouvoir être déplacé, de préférence dans lequel le convertisseur de vent (1) présente plusieurs galets de roulement (18) pouvant de préférence être bloqués.

6. Convertisseur de vent (1) selon l'une des revendications précédentes, **caractérisé en ce qu'**au moins l'une des pales de rotor (3) présente une surface (26) au moins sensiblement concave et/ou côté au vent, qui présente une structure au moins sensiblement en dents de scie et/ou en escalier et/ou des évidements asymétriques (27), de préférence, une partie plus courte (28) d'une dent de scie de la structure en dents de scie et/ou des évidements (27) formés de manière asymétrique étant tournée vers l'axe de rotation (4) et/ou plus proche de l'axe de rotation qu'une partie plus longue (29), et/ou de préférence, une partie d'un gradin de la structure en gradins étant orientée au moins sensiblement perpendiculairement à la direction principale d'écoulement.

7. Convertisseur de vent (1) selon l'une des revendications précédentes, **caractérisé en ce qu'**au moins l'une des aubes de rotor (3) présente plusieurs cavités et/ou est constituée au moins essentiellement d'un matériau expansé (30), en particulier dans lequel l'aube de rotor (3) présente une surface (26) structurée au moins par sections et/ou plusieurs évidements (27).

8. Convertisseur de vent (1) selon l'une des revendications précédentes, **caractérisé en ce que** les aubes de rotor (3) sont disposées dans deux ou plusieurs plans ou couches avec un axe de rotation coaxial (4) et décalées dans la direction circonférentielle, les plans ou couches d'aubes de rotor (3) formant de préférence ensemble le rotor (2), et/ou les plans ou couches d'aubes de rotor (3) étant couplés, de préférence par adhérence, et/ou les aubes de rotor (3) des plans étant disposées de manière non alignée les unes par rapport aux autres pour améliorer l'écoulement.

9. Convertisseur de vent (1) selon l'une des revendications précédentes, **caractérisé en ce que** le rotor (2) est monté sans perte, magnétiquement ou de manière flottante.

10. Convertisseur de vent selon l'une des revendications précédentes, **caractérisé en ce que** des pales de rotor (3) formées au moins essentiellement d'un matériau expansé sont fixées au rotor (2).

11. Convertisseur de vent (1) selon l'une des revendications précédentes, **caractérisé en ce que** le convertisseur éolien (1) présente des éléments de guidage (9) captant le vent et guidant le vent, répartis sur la périphérie du rotor (2), et/ou des éléments de guidage du vent (17), afin de former une structure ouverte et/ou d'alimenter en vent plusieurs fois et simultanément des profils ou des structures en dents de scie des aubes de rotor (3) par l'intermédiaire de plusieurs éléments de guidage (9).

12. Convertisseur de vent selon l'une des revendications précédentes, **caractérisé en ce que** plusieurs rotors (2A, 2B) avec respectivement plusieurs aubes de rotor (3) sont disposés coaxialement les uns par rapport aux autres, de préférence, les aubes de rotor (3) de l'un des rotors (2A) étant décalées ou tournées par rapport aux aubes de rotor (3) de l'autre rotor (2B) et/ou plusieurs rotors (2A, 2B) avec respectivement plusieurs aubes de rotor (3) pouvant tourner autour d'un axe de rotation commun (4) et/ou présentant un arbre de rotor commun (22).

13. Convertisseur de vent selon l'une des revendications précédentes, **caractérisé en ce que** les pales de rotor (3) sont réalisées en forme de croissant, en particulier en partant de l'axe de rotation (4) vers l'extérieur en direction d'une extrémité libre (15), et/ou **en ce que** le convertisseur de vent (1) ou son châssis (5) présente ou forme sur sa périphérie et/ou en haut et/ou en bas une structure ouverte au vent ou à l'air (L) et/ou **en ce que** les pales de rotor (3) s'étendent de l'axe de rotation (4) jusqu'à la périphérie extérieure du rotor (2), de préférence de manière continue et/ou avec des dimensions constantes dans la direction verticale.

14. Système de convertisseur de vent avec plusieurs convertisseurs de vent (1) conçus comme des modules séparés selon l'une des revendications précédentes.

15. Système de convertisseurs de vent selon la revendication 14, **caractérisé en ce que** les convertisseurs de vent (1) sont disposés axialement les uns par rapport aux autres et/ou les uns au-dessus des autres, de préférence les rotors (2) des convertisseurs de vent (1) étant montés rotatifs autour d'un axe de rotation (4) commun, et/ou les rotors (2) des convertisseurs de vent (1) présentant un arbre de rotor (22) commun, et/ou les rotors (2) de plusieurs, de préférence de tous les convertisseurs de vent (1) étant couplés entre eux, en particulier par adhérence.

16. Eolienne avec au moins un convertisseur de vent (1) selon l'une des revendications 1 à 13 ou avec au moins un système de convertisseur de vent selon la revendication 14, et avec au moins un générateur (38) qui peut être entraîné par le au moins un convertisseur de vent (1), de préférence au moyen du au moins un rotor (2).
